# EUROPÄISCHE PATENTSCHRIFT

(11) **EP 3 366 614 B1**
(45) Veröffentlichungstag und Bekanntmachung des Hinweises auf die Patenterteilung: **19.05.2021**
(21) Anmeldenummer: 18155568.1
(22) Anmeldetag: 07.02.2018
(51) Int. Cl.: B65B 35/24, B65B 59/00, B65G 19/28, B65G 19/24, B65B 35/44, B65B 9/067, B65B 59/04, B65G 19/02, B65G 21/06

(54) **ZUFUHRKETTEN-EINHEIT**
SUPPLY CHAIN UNIT
UNITÉ DE CHAÎNES D'ALIMENTATION

(30) Priorität: 24.02.2017 DE 102017103917
(43) Veröffentlichungstag der Anmeldung: 29.08.2018
(73) Patentinhaber: Gerhard Schubert GmbH, 74564 Crailsheim (DE)
(72) Erfinder: HAAF, Walter, 74564 Crailsheim (DE)
(74) Vertreter: Weickmann & Weickmann PartmbB

(56) Entgegenhaltungen:
- EP-A1- 3 056 441
- CH-A1- 710 023
- DE-A1- 2 604 007
- DE-A1- 2 647 726
- DE-B3-102015 101 930
- DE-U1- 29 607 810
- JP-A- S63 237 834
- US-A- 5 337 887
- US-A- 5 638 659
- US-A1- 2004 045 794
- US-A1- 2007 191 201
- US-A1- 2013 042 732

## Beschreibung

### I. Anwendungsgebiet

Die Erfindung betrifft eine Zufuhrketten-Einheit, wie sie insbesondere in Schlauchbeutelmaschinen zur definierten Zufuhr der zu verpackenden Produkte eingesetzt wird.

Bei Schlauchbeutelmaschinen werden Schlauchbeutel aus einer laufenden, zunächst ebenen, Folienbahn geformt, indem die Längsränder der - meist horizontal oder leicht schräg nach unter laufenden - Folienbahn gegeneinander gebogen und in Längsrichtung durchgehend gegeneinander versiegelt werden.

Ins Innere des entstehenden Folienschlauches werden mit der gleichen Laufrichtung und meist auch der gleichen Laufgeschwindigkeit die Produkte von der Zufuhrketten-Einheit eingebracht, sodass sich die Produkte danach in den gewünschten Abständen innerhalb des Folienschlauches befinden, sodass nach dem Einbringen der Produkte der Folienschlauch durch Quersiegelnähte zwischen den Produkten in einzelne Schlauchbeutel unterteilt werden kann.

### II. Technischer Hintergrund

Bei der Zufuhrketten-Einheit liegen die Produkte auf einer Auflagefläche auf und werden meist durch die in regelmäßigen Abständen an der Zufuhrkette befestigten Mitnehmer entlang der Auflagefläche vorwärts geschoben. Bei einer Schlauchbeutelmaschine muss die Zufuhrkette vor dem Punkt des Gegeneinander-Führens der Längsränder der Folienbahn aus dem inneren Querschnitt des entstehenden Folienschlauches herausgeführt werden, meist indem die Zufuhrkette nach unten abtaucht, wobei stromabwärts der Zufuhrketten-Einheit oft wenig Freiraum vorhanden ist.

Hauptziel ist dabei die exakte Positionierung der Produkte auf der Auflagefläche, auch wenn Produkte übereinander angeordnet werden müssen.

Bei der Zufuhrketten-Einheit muss relativ oft ein sog. Formatwechsel durchgeführt werden, also die Umstellung von einem bisherigen auf ein neues abzupackendes Produkt, welches sich natürlich hinsichtlich Form, Gewicht, Größe und ggf. weiteren Parametern von dem bisherigen Produkt in der Regel unterscheidet.

Dann müssen die Zufuhrketten umgerüstet werden, indem beispielsweise der Abstand der Mitnehmer in Längsrichtung entlang der Zufuhrkette verändert wird, ggf. die Mitnehmer auch körperlich anders gestaltet sein müssen in Anpassung an die Form des Produktes, und unter Umständen auch die Seitenführungen, die verhindern, dass das Produkt seitlich von der Zufuhrkette herunterläuft, in ihrem Abstand gegeneinander neu eingestellt werden müssen.

Bei den meisten Anwendungen ist hierfür der Ausbau der Zufuhrkette notwendig, was einen erheblichen Aufwand und eine lange Stillstandszeit der entsprechenden Maschine zur Folge hat.

Um einen Formatwechsel an einer solchen Zufuhrketten-Einheit in möglichst kurzer Zeit durchzuführen, ist es bereits bekannt, die an der Zufuhrkette befestigten Mitnehmer für Produkte auswechselbar an der Zufuhrkette zu befestigen, um abhängig von Art und Größe des Produktes die Mitnehmer in einem größeren oder kleineren Abstand auf der Zufuhrkette anzuordnen oder auch einfach anders geformte, an das neue Produkt angepasste, Mitnehmer auf der Zufuhrkette zu befestigen.

In der Regel läuft ja die Zufuhrkette endlos in einer vertikalen Umlaufebene um, wobei die Mitnehmer in dieser Umlaufebene radial nach außen abstehen.

Vom Obertrum einer solchen, über zwei horizontal beabstandete Umlaufrollen umlaufenden, Zufuhrkette ragen die Mitnehmer also nach oben ab. In Laufrichtung links und rechts dieser nach oben ragenden Mitnehmer verläuft in geringem Abstand, einem Schlitz, jeweils ein Auflage-Teil einer Auflagefläche für die Produkte, wobei der ebenfalls in Laufrichtung verlaufende Schlitz zwischen den beiden Auflage-Teilen so gering wie möglich gewählt wird, also gerade groß genug, um die nach oben aufragenden Mitnehmer von der unter der Auflagefläche umlaufenden Zufuhrkette aus in den Bereich nach oberhalb der Auflagefläche aufragen zu lassen, und dort die Produkte vorwärts zu schieben.

Für die Formatumstellung muss also entweder der gesamte Mitnehmer leicht demontierbar und montierbar an der Zufuhrkette sein, oder der Mitnehmer besteht aus einem Basisteil, welches fest verbunden immer an der Zufuhrkette verbleibt und einem demgegenüber leicht montierbaren und demontierbaren Mitnehmer-Teil, welches an dem Basisteil zum Beispiel eingesteckt und verrastet oder auf andere Art und Weise sehr einfach gewechselt werden kann.

Das Basisteil steht in diesem Fall in der Regel nicht über die Oberkante der Auflagefläche für die Produkte vor.

Eine solche Lösung zeigt die DE 102015101930 B3 als auch die darauf aufbauende EP 3056441 A1 Die DE 102015101930 B3 offenbart den Oberbegriff des Anspruchs 1. Bei bisherigen Lösungen musste zum Wechseln der Mitnehmer die Zufuhrkette entweder komplett aus der Schlauchbeutel-Maschine ausgebaut und dann die Mitnehmer gewechselt werden oder es mussten zumindest andere Teile der Schlauchbeutel-Maschine, wie Abdeckungen, Gehäuseteile u.ä. demontiert werden, um die Mitnehmer an der dann besser zugänglichen Zufuhrkette wechseln zu können.

Des Weiteren mussten zum Reinigen bei bisherigen Lösungen häufig umfangreiche und zeitaufwändige Demontage-Arbeiten an der Zufuhrketten-Einheit durchgeführt werden.

Das deutsche Gebrauchsmuster DE 29607810 U1 zeigt dagegen eine Lösung, bei der die beiden Hälften einer Gleitfläche, auf der die Produkte durch Mitnehmer entlang geschoben werden, zur Seite geklappt werden können und dadurch die Zugänglichkeit zur Zufuhrkette erreicht wird

### III. Darstellung der Erfindung

### a) Technische Aufgabe

Es ist daher die Aufgabe gemäß der Erfindung, eine Zufuhrketten-Einheit zu schaffen, bei der mit geringem baulichen Aufwand immer die zuverlässige, korrekte Positionierung der Produkte auf der Zufuhrkette gewährleistet ist, ein Formatwechsel in sehr kurzer Zeit durchgeführt werden kann, die Zufuhrketten-Einheit leicht gereinigt werden kann und die Zufuhrketten-Einheit stromabwärts möglichst wenig Freiraum beansprucht.

### b) Lösung der Aufgabe

Diese Aufgabe wird durch die Merkmale der Ansprüche 1 und 23 gelöst.

Vorteilhafte Ausführungsformen ergeben sich aus den Unteransprüchen. Hinsichtlich der Zufuhrketten-Einheit wird diese Aufgabe dadurch gelöst, dass die Mitnehmer und insbesondere deren Befestigung gegenüber der Zufuhrkette so ausgebildet sind, dass entweder zum Lösen des gesamten Mitnehmers oder wenigstens eines Teiles, insbesondere des Mitnehmerteils vom Basis-Teil des Mitnehmers, von der Zufuhrkette, möglichst keinerlei Demontagearbeiten an der Schlauchbeutel-Maschine - außer den demontierten Mitnehmern - durchgeführt werden müssen.

Vorzugsweise werden die Mitnehmer oder Teile des Mitnehmers in der Umlaufebene der Zufuhrkette nach außen, beim Obertrum also nach oben oder quer zur Umlaufebene, abgezogen und/oder auf gesteckt, um entweder andere Mitnehmer zu verwenden, entsprechend einem anderen abzupackenden Produkt, oder um diese Mitnehmer zu reinigen oder um diese Mitnehmer in einem anderen Längsabstand, also mit einer anderen Teilung, an der Zufuhrkette wieder zu befestigen.

Wenn im Folgenden davon gesprochen wird, dass zwei Teile aneinander entweder leicht lösbar oder nicht lösbar befestigt sind, so ist dies so zu verstehen, dass
- "nicht lösbar" bedeuten soll, dass die beiden Teile entweder nur unter Zerstörung der Verbindung zwischen ihnen voneinander gelöst werden können oder mittels zeitaufwändiger Demontagearbeiten, die insbesondere mehr als **10** Sekunden, insbesondere mehr als 20 Sekunden benötigen, insbesondere unter Benutzung von Werkzeugen und
- "leicht lösbar" bedeuten soll, dass die beiden Teile mit sehr geringem Zeitaufwand, die insbesondere weniger als **20** Sekunden, besser **10** Sekunden benötigen, insbesondere ohne Benutzung eines Werkzeuges, voneinander ohne Zerstörung des Verbindungsmechanismus gelöst werden können, insbesondere durch ineinanderstecken und/oder ineinanderschieben und/oder Verrasten, und dadurch bereits die Verbindung hergestellt ist

Die Auflagefläche besteht dabei aus einer oder zwei beidseits der nach oben ragenden Mitnehmer angeordneten mitlaufenden Auflagefläche, vorzugsweise eines jeweils umlaufenden Auflagebandes, wobei eine Steuerung zumindest alle bewegten Teile der Zufuhrketten-Einheit ansteuert.

Hierfür stehen die Mitnehmer also in aller Regel über den - in der Seitenansicht sichtbaren - Kettenumlauf radial nach außen, also vom Obertrum nach oben und vom Untertrum nach unten, vor, wobei die Umlaufebene der Zufuhrkette in der Regel vertikal steht.

Eine Reinigung einer solchen Zufuhrketten-Einheit muss aus hygienischen Gründen relativ oft durchgeführt werden, sodass der Zeitaufwand hierfür möglichst gering gehalten werden soll. Dabei müssen primär die mit den abzupackenden Produkten in Kontakt tretenden Teile der Zufuhrketten-Einheit gereinigt werden, was vorzugsweise mittels eines Hochdruck-Reinigers geschieht.

Um das Reinigen zu erleichtern, sind erfindungsgemäß die Auflageeinheiten, also diejenigen Einheiten links und rechts der mit der Zufuhrkette umlaufenden Mitnehmer, in welchen je ein umlaufendes Auflageband vorhanden ist, in Querrichtung beweglich ausgestattet, um sie von der Betriebsstellung - in der sie sich so nah an den Mitnehmern befinden, dass sich die Mitnehmer gerade noch durch den Schlitz zwischen den beiden Obertrumen der Auflagebänder hindurch erstrecken können - in eine davon seitlich beabstandete Reinigungsstellung zu verbringen.

Entweder werden hierzu die Auflageeinheiten in Querrichtung linear entlang von z.B. Führungen verfahren, oder sie werden um eine Schwenkachse verschwenkt, vorzugsweise um eine parallel zur Durchlaufrichtung verlaufende Schwenkachse verschwenkt.

Wenn diese Schwenkachse sich im unteren Bereich der Auflageeinheit, insbesondere in der unteren Hälfte oder dem unteren Drittel, befindet, lässt sich dadurch vor allem der obere Bereich der Auflageeinheit zur Seite nach außen verschwenken.

Dies ergibt nicht nur einen ausreichenden Abstand in Querrichtung zwischen den Auflageeinheiten, sondern durch dieses Aufklappen ist auch die Unterseite des Obertrums der Auflagebänder für den Reinigungsvorgang gut erreichbar.

Das Obertrum der Zufuhrkette ist auf der Oberseite und vorzugsweise auch auf den Seiten durch eine Obertrum-Abdeckung abgedeckt, um zu vermeiden, dass sich dort Verschmutzungen anlagern können, wobei diese in Längsrichtung betrachtet etwa umgekehrt U-förmige Obertrum-Abdeckung nicht nur die Kette abdeckt, sondern auch zumindest einen Teil der an der Zufuhrkette befestigten Mitnehmer.

Dadurch ist es möglich, für eine Standard-Reinigung die Obertrum-Abdeckung auch auf dem Obertrum der Zufuhrkette zu belassen, und nur in größeren zeitlichen Abständen als die Standardreinigung diese Obertrum-Abdeckung zu entfernen und selbst zu reinigen und dabei auch die gesamte Zufuhrkette zu reinigen.

Wenn in der Reinigungsstellung ausreichend Platz um die Zufuhrkette herum vorhanden ist, um die Mitnehmer vom Obertrum der Zufuhrkette zu demontieren oder daran neu zu montieren, vorzugsweise nur abzuziehen oder aufzustecken, kann diese Reinigungsstellung eben auch zum Wechsel der Mitnehmer am Obertrum benutzt werden.

Dies ist vor allem dann sinnvoll, wenn die Zufuhrketten-Einheit in einer Maschine verbaut ist, zu der ohnehin Roboter gehören, wie etwa eine Schlauchbeutelmaschine, bei der das Auflegen der Produkte auf das Auflageband von Robotern durchgeführt wird.

Dann können unter Umständen die gleichen Roboter - bei denen lediglich das Werkzeug am freien Ende des Roboterarmes hierfür gewechselt werden muss, auch die Mitnehmer von der Zufuhrkette entfernen oder an diesen befestigen.

In der Regel ist es jedoch - aus Zugänglichkeitsgründen - günstiger, die Mitnehmer am Untertrum der Zufuhrkette zu montieren oder zu demontieren, wofür in der Nähe des Untertrums ein Mitnehmer-Wechsler vorgesehen ist, der mindestens ein Wechselwerkzeug zum Ergreifen und Handhaben der Mitnehmer, also auch zum Entfernen oder Anbringen an der Zufuhrkette, und vorzugsweise auch zum Ablegen der Mitnehmer in einer Ablage-Kassette aufweist.

Vorzugsweise ist der Mitnehmer-Wechsler in Längsrichtung an einer solchen festen Position an der Zufuhrketten-Einheit befestigt, dass sich die Mitnehmer am Untertrum im Wirkbereich des Mitnehmer-Wechslers befinden und das Wechselwerkzeug oder der gesamte Mitnehmer-Wechsler in und entgegen der Abzugsrichtung, in der die Mitnehmer von der Zufuhrkette abgezogen und in umgekehrter Richtung wieder an dieser aufgesteckt werden müssen, als erste Richtung beweglich, insbesondere verfahrbar entlang von Führungen.

Um die von der Zufuhrkette abgenommenen Mitnehmer anschließend in einer Ablagekassette abzulegen, die sich ebenfalls im Wirkbereich des Mitnehmer-Wechslers befindet, und dort vorzugsweise formschlüssig zu fixieren, ist das Wechsel-Werkzeug, insbesondere der gesamte Mitnehmer-Wechsler, in einer zweiten Richtung beweglich, insbesondere relativ zur Ablagekassette beweglich, insbesondere verfahrbar, oder die Ablagekassette ist in dieser Richtung beweglich, insbesondere verfahrbar.

Vorzugsweise ist das Wechselwerkzeug relativ zur Ablagekassette, insbesondere auch in seiner absoluten Bewegung, in allen drei Raumrichtungen beweglich, insbesondere verfahrbar.

Vorzugsweise ist das Wechselwerkzeug zusätzlich um mindestens eine Achse drehbar, um die Orientierung des vom Wechselwerkzeug gehaltenen Mitnehmers zu ändern:
Dies ist beispielsweise notwendig, um den vom Untertrum aus nach unten ragenden Mitnehmer nach dem Abnehmen von der Zufuhrkette und vor dem Absetzen in der Ablagekassette um 180° zu drehen, damit er mit seinem freien Ende, dem Mitnehmerteil, von der Ablagekassette nach oben ragt.

Die Ablagekassetten sind natürlich austauschbar an der Zufuhrketten-Einheit befestigt und insbesondere in diese einschiebbar, insbesondere in Querrichtung einschiebbar, um sie im Greifbereich des Mitnehmer-Wechslers definiert zu positionieren.

Denn die Ablagekassette dient in aller Regel nicht nur der Aufbewahrung der Mitnehmer, falls diese momentan nicht im Einsatz sind, sondern vor allem auch der Reinigung der Mitnehmer:
Zu diesem Zweck besteht die Ablagekassette vorzugsweise aus Kunststoff und/oder Edelstahl, und die vorzugsweise formschlüssig fest darin gehaltenen Mitnehmer stehen aus dieser meist rahmenartigen, in der Regel von oben nach unten offenen, Ablagekassette nach oben vor und können dadurch gut gereinigt werden, sei es mit einem Hochdruckreiniger oder in einer stationären Waschmaschine.

Im vorliegenden Fall ist als Zufuhrkette eine Bolzenkette oder Rollenkette eingesetzt, bei der die Kettenbolzen einseitig aus der Kette vorstehen und zum Befestigen der Mitnehmer verwendet werden können, die dann lediglich in Querrichtung zur Umlaufebene der Zufuhrkette auf den seitlichen Überstand des Kettenbolzens aufgeschoben werden müssen, wobei in der Regel jeder Mitnehmer auf nur einen Kettenbolzen aufgeschoben ist, und schwenkbar um diesen Kettenbolzen herum ist:
Dies kann dazu benutzt werden, damit beim Absinken der Mitnehmer am stromabwärtigen Ende der Zufuhrkette während des Absinkens, also während das Obertrum in den Umfangsbereich des Umlenkritzels gerät, der Mitnehmer nach wie vor vertikal nach oben ragt, bis er vollständig unter die Ebene der Auflagefläche für die Produkte abgesunken ist.

Zu diesem Zweck wird der Mitnehmer - zusätzlich zu seiner Befestigung am Kettenbolzen - mittels einer Kulissenführung entsprechend geführt.

Dazu ragt in diesem Fall vom Mitnehmer ein Führungsbolzen in Querrichtung ab, vorzugsweise in Richtung auf die Zufuhrkette zu, aber in einem Bereich abseits der Zufuhrkette.

Der Mitnehmer kann einstückig ausgeführt sein oder - wie im vorliegenden Fall - zweiteilig aus einem aus Kunststoff bestehenden Befestigungsteil, welches der Befestigung an der Zufuhrkette dient und einem daran befestigten, insbesondere verschraubten - und damit nicht leicht lösbaren - Mitnehmerteil, welches aus Edelstahl besteht, sich durch den Schlitz in der Auflagefläche hindurch nach oben erstreckt und mit den Produkten in Anlage gerät.

Dies hat den Vorteil, dass der im Vergleich zum Mitnehmerteil aufwändiger zu bearbeitende Befestigungsteil leicht durch spanabhebende Methoden bearbeitet werden kann und dennoch gut zu reinigen ist.

Die Mitnehmer müssen ferner eine Befestigungsvorrichtung aufweisen, die mit einer entsprechenden Befestigungsvorrichtung in der Ablagekassette zusammenwirkt.

Vorzugsweise sind hierfür auf der vom Mitnehmerteil abgewandten Seite, insbesondere in Bodenfläche des Befestigungsteils des Mitnehmers, zwei Ablageöffnungen vorgesehen, mit denen der Werkzeugwechsler den Mitnehmer auf entsprechend beabstandete, nach oben aufragende, Ablage-Zapfen der Ablagekassette aufstecken kann.

Vorzugsweise sind alle Öffnungen im Mitnehmer, insbesondere im Basisteil des Mitnehmers, als Durchgangsöffnungen ausgebildet, um sich darin anlagernde Verschmutzungen leichter entfernen zu können.

Die Ablageöffnungen können jedoch auch als Sackloch-Öffnungen ausgebildet sein, da sie dann in der Ablageposition in der Ablagekassette nur nach unten offen sind und beim Reinigen von oben her keine Flüssigkeit darin eindringen kann.

In einer bevorzugten Ausführungsform läuft auf jeder Seite der Mitnehmer-Ebene, also einer Ebene, in der die Mitnehmer im Betrieb mit der Zufuhrkette umlaufen, nicht nur ein Auflage-Band um, sondern in Längsrichtung beabstandet zwei hintereinander angeordnete Auflagebänder, wobei sich die Lücke zwischen stromaufwärtigem und stromabwärtigem Auflageband vorzugsweise auf beiden Seiten an derselben Stelle befindet.

Die in Längsrichtung aufeinander folgenden Auflagebänder oder Auflage-Abschnitte können in demselben tragenden Gestell, also in der gleichen Auflage-Einheit angeordnet sein oder in getrennten Auflageeinheiten.

In einer ersten Bauform können die Mitnehmer - wie weiter oben beschrieben - zwar mehrteilig ausgebildet sein, die mehreren Teile jedoch nicht leicht lösbar miteinander verbunden sein und somit nicht schnell auseinander zu nehmen sein so dass sie insbesondere als Einheit beim Wechsel der Mitnehmer gehandhabt werden müssen.

In einer zweiten. Bauform können die Mitnehmer aus Basisteil und daran leicht lösbar befestigtem Mitnehmerteil bestehen, wobei das Mitnehmerteil am Basisteil befestigt wird z.B. durch einfaches Einstecken und dabei Verrasten der beiden Teile gegeneinander, und umgekehrt durch einfaches Abziehen des Mitnehmerteils nach oben dieses demontiert werden kann.

Es kann auch der der Zufuhrkette zugewandte Teil des einstückigen Mitnehmers oder das Basisteil eines zweiteiligen Mitnehmers einen in Laufrichtung der Zufuhrkette sich erstreckenden Führungs-Schenkel aufweisen - beispielsweise neben der eigentlichen Zufuhrkette - der am Ende der Transportstrecke formschlüssig mit einer darunter angeordneten Führungs-Schiene als Kulissenführung zusammenwirkt.

Wenn bei zweiteiligen Mitnehmern das Basisteil immer an der Zufuhrkette verbleibt, können die Abstände zwischen den Mitnehmern nur dadurch verändert werden, indem das Mitnehmerteil entweder auf jedem oder nur jedem zweiten oder nur jedem dritten Basisteil aufgesetzt wird, sodass die mögliche entstehende Größe der Gefache immer ein ganzzahliges Vielfaches - hinsichtlich der Länge in Durchlaufrichtung - des kürzesten möglichen Gefaches sein kann.

Will man sehr variabel sein, müssten hier also sehr viele Basisteile in sehr geringem Abstand an der Zufuhrkette befestigt werden.

Wenn dagegen zum Wechseln des Formates immer der gesamte Mitnehmer von der Zufuhrkette entfernt wird, müssen lediglich in Längsrichtung eng beabstandete Befestigungsvorrichtungen, z.B. einseitig überstehende, frei auskragende, Kettenbolzen an der Zufuhrkette hierfür vorhanden sein, insbesondere bei jedem Kettenglied oder sogar jedem Kettenbolzen.

Weiter besteht das Problem, dass die Mitnehmer am Ende der Förderstrecke der Zufuhrkette, also wenn der Mitnehmer um die vordere Umlenkrolle herum geführt wird, nicht radial von der Umlenkrolle abstehen soll, sondern der entlang der Förderstrecke immer im gleichen Aufrecht-Winkel zur Horizontalen nach oben aufragende Mitnehmer diesen Aufrecht-Winkel auch zu Beginn des Umlaufs um die stromabwärtige Umlenkrolle so lange beibehalten soll, bis die Oberkante des Mitnehmers unter die Oberkante der Auflagefläche der Zufuhrkette oder eine stromabwärtige nachgeordnete, weitere Auflagefläche, auf die die Produkte von der Zufuhrkette aufgeschoben werden, abgetaucht ist.

Zu diesem Zweck müssen die Mitnehmer vorzugsweise gelenkig um eine in Querrichtung verlaufende Schwenkachse innerhalb des Mitnehmers oder gegenüber der Zufuhrkette - z.B. den frei auskragenden Kettenbolzen - gestaltet sein und mit einer entsprechenden Kulissenführung im Bereich des beginnenden Herumführens um die Umlenkrolle geführt sein.

Hinsichtlich des Verfahrens zum Steuern der Zufuhrketten-Einheit ist jedoch wesentlich, dass diese in Längsrichtung aufeinander folgenden Auflagebänder oder Auflageabschnitte mit unterschiedlichen Geschwindigkeiten, vorzugsweise unabhängig voneinander, antreibbar sind.

So kann das wenigstens eine Auflageband im stromaufwärtigen Abschnitt - vor allem in dem Bereich, in dem die Produkte auf der Auflagefläche, gebildet durch die meist beiden nebeneinander laufenden Auflagebänder aufgelegt werden - beispielsweise synchron, also in der gleichen Geschwindigkeit, wie die Mitnehmer laufen.

Denn die auflegenden z.B. Roboter legen das oder die Produkte immer zwischen zwei in Längsrichtung aufeinander folgenden Mitnehmern ab, sodass das Produkt zunächst nicht mit den Mitnehmern in Kontakt steht, sondern in gleichbleibendem Abstand zu diesem bleibt, da es mit derselben Geschwindigkeit auf den Auflagebändern mitbewegt wird.

Man möchte natürlich vor dem Einführen der Produkte gerade in einen entstehenden Beutel-Schlauch einer Schlauchbeutelmaschine, aber auch bei anderen Anwendungen, eine definierte Position des Produktes auf der Zufuhrkette erreichen, vorzugsweise eben in Anlage an den Mitnehmer.

Deshalb werden vorzugsweise im stromabwärtigen Auflageabschnitt die Auflagebänder etwas langsamer laufen als die Mitnehmer, sodass die Mitnehmer das vor ihnen liegende Produkt erreichen und von da ab vor sich her schieben, um eine definierte, am Mitnehmer anliegende Position des Produktes bezüglich der Mitnehmer zu erreichen.

Dies ist besonders dann von Vorteil wenn es sich um zwei oder gar mehr aufeinander liegende Produkte wie etwa zwei oder drei flache Kekse handelt, die von dem Roboter nacheinander aufgelegt werden, und bei denen in aller Regel die Produkte nie 100 %-ig deckungsgleich übereinander liegen.

Durch das Anschieben der Produkte durch den Mitnehmer werden diese zumindest in Längsrichtung fluchtend übereinander am Mitnehmer anliegen, während die Fluchtung in Querrichtung der beiden übereinander liegenden Produkte durch seitliche Führungen erreicht werden kann.

### c) Ausführungsbeispiele

Ausführungsformen gemäß der Erfindung sind im Folgenden beispielhaft näher beschrieben. Es zeigen:

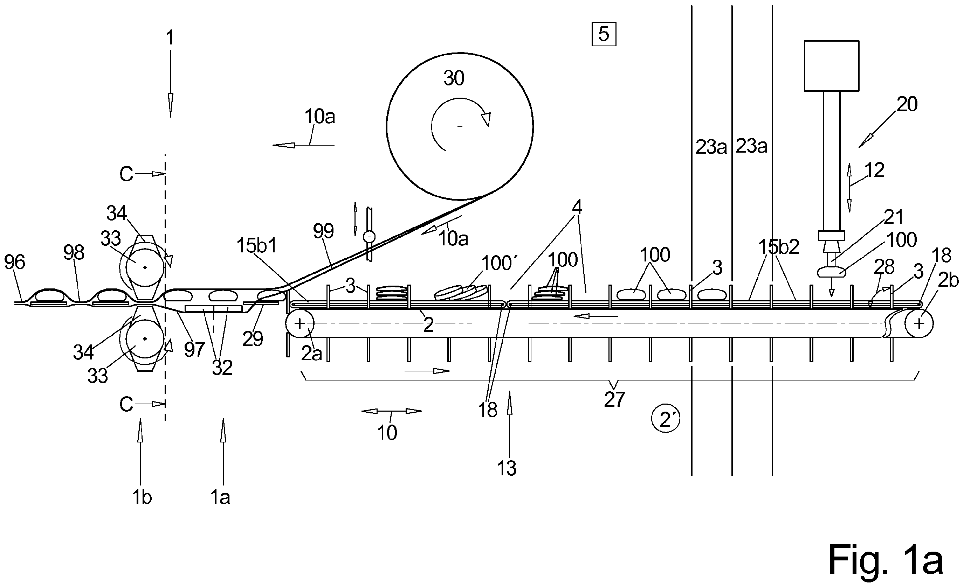

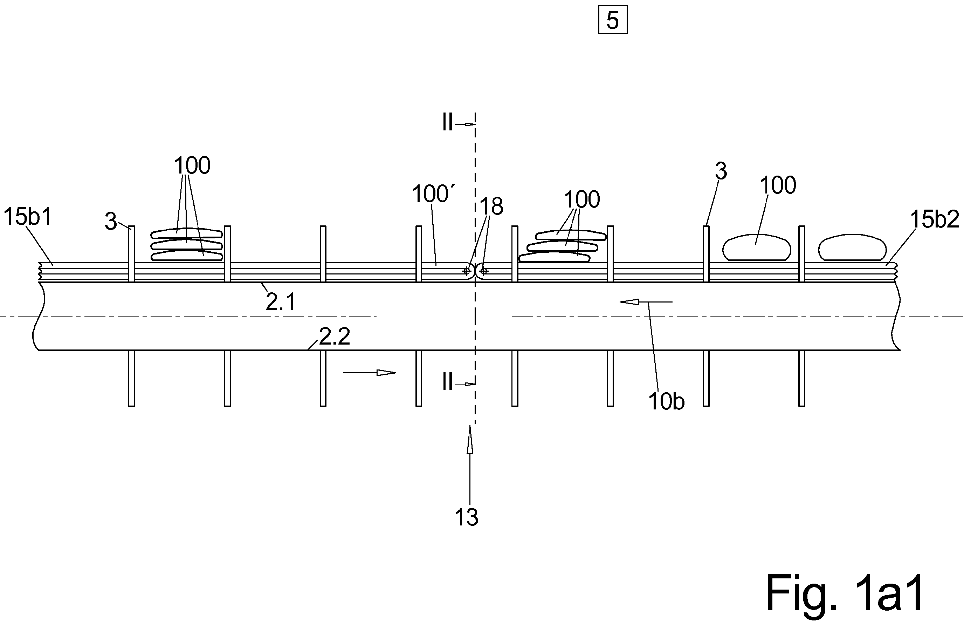

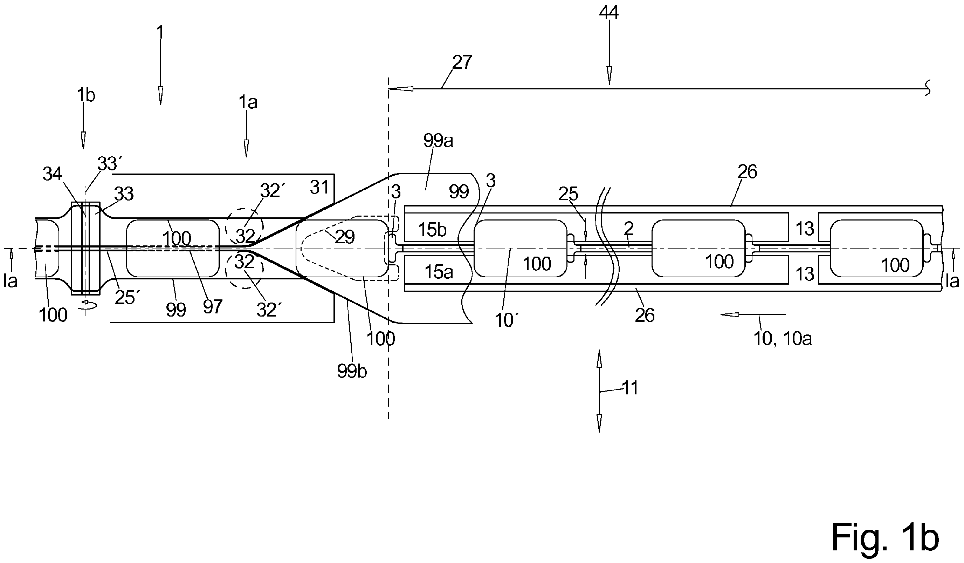

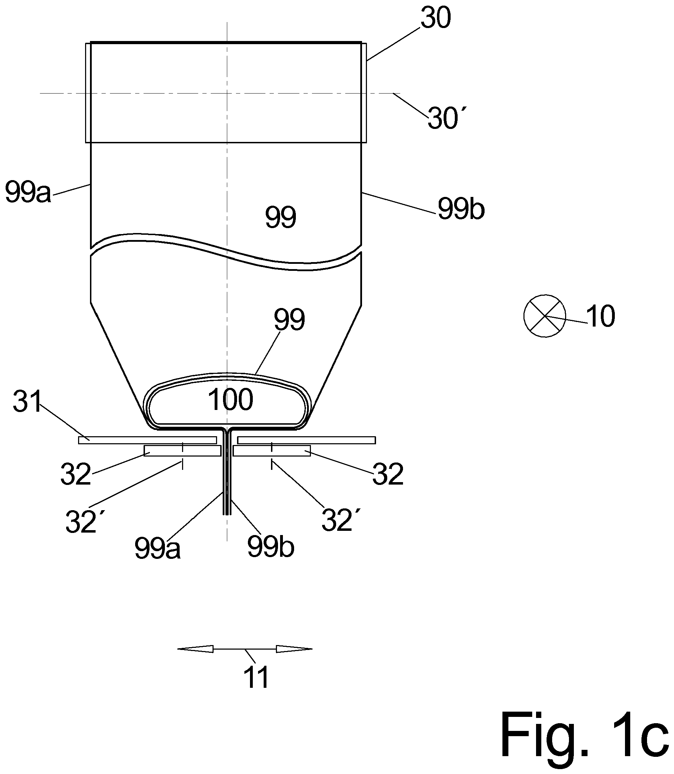

- Fig. **1a, b, c:**: die Zufuhrketten-Einheit in Seitenansicht, Aufsicht und Frontansicht,
- Fig. **1a1**: eine Ausschnitt-Vergrößerung aus Figur 1a,
- **Fig. 2a:**: die Zufuhrkette der Zufuhrketten-Einheit ausschnittweise in der Seitenansicht,
- Fig. **2b - d**:: die Zufuhrketten-Einheit in unterschiedlichen Funktionsstellungen betrachtet in Längsrichtung,
- Fig. **3a** - **d:**: eine erste Bauform der Mitnehmer mit der Zufuhrkette in unterschiedlichen Ansichten und Funktionsstellungen,
- Fig. **4a** - **d:**: eine zweite Bauform der Mitnehmer mit der Zufuhrkette in unterschiedlichen Ansichten und Funktionsstellungen,

In den **Figuren 1a****,** **b****,** **c** ist die Zufuhrketten-Einheit **44** mit einer nachfolgenden Schlauchbeutel-Baugruppe **1** dargestellt:
Die Zufuhrkette **2** läuft in einer vertikal stehenden Umlaufebene **2'** um, welche die Zeichenebene der **Figur 1a** ist, zwischen mindestens einer stromabwärtigen Umlenkrolle **2a** und mindestens einer stromaufwärtigen Umlenkrolle **2b,** von denen mindestens eine angetrieben ist, um die Zufuhrkette in der gewünschten Weise in Bewegung zu setzen.

Betrachtet quer zu dieser Umlaufebene **2',** wie in **Figur 1a****,** stehen die Mitnehmer **3,** die an der Zufuhrkette **2** befestigt sind, von der endlos umlaufenden Zufuhrkette **2** nach außen ab, ragen also vom Obertrum der Zufuhrkette **2** aus nach oben und erstrecken sich durch einen Schlitz in der Auflagefläche für die Produkte **100** über diese Auflagefläche hinaus, um die darauf liegenden Produkte **100** oder Produktgruppen **100'** auf der Auflagefläche vorwärts zu schieben, die sich in Form von Auflage-Teilen **15a,** b gemäß der Aufsicht und Frontansicht der **Figuren 1b**, **c** beidseits des Schlitzes **25** für die Mitnehmer **3** etwas oberhalb der Zufuhrkette **2** verläuft.

Die Auflage-Teile 15a, b sind vorzugsweise jeweils endlose, in einer Umlaufebene, die vorzugsweise parallel zur Umlaufebene 2' der Zufuhrkette 2 liegt, über je mindestens 2 Umlenkrollen 18 umlaufende und durch einen in Durchlaufrichtung verlaufenden Schlitz 15 voneinander getrennte Auflage-Bänder 15 a, b, auf deren Obertrum die Produkte 100 - über den Schlitz 15 dazwischen hinweg - aufliegen.

Obertrum als auch Untertrum der Auflage-Teile 15a, b sind höher als das Obertrum der Zufuhrkette 2 angeordnet.

Oberhalb des Schlitzes **25** sind die Mitnehmer **3** in der Regel verbreitert und ragen seitlich über die Breite des Schlitzes **25** hinaus, um die Produkte zuverlässig vorwärts schieben zu können, wobei an den Außenseiten der Auflageteile **15a,** b ebenfalls in Längsrichtung **10** verlaufend Seitenführungen **26** angeordnet sind, deren gegenseitiger Abstand möglichst genau an die Breite der Produkte **100** angepasst ist, ebenso wie auch die Breite - in Querrichtung **11** gemessen - der Mitnehmer **3** an die Breite der Produkte **100** angepasst ist.

Im normalen Betrieb der z.B. Schlauchbeutelmaschine ist es von essentieller Bedeutung, dass in jedes der - zwischen den in Längsrichtung **10** beabstandeten Mitnehmern **3** gebildeten - Gefache **4** der Zufuhrkette **2** jeweils meist nur ein Produkt **100** eingelegt ist. Dass die Darstellung in **Figur 1a****,** dass in einem Gefach 4 ein einzelnes Produkt **100,** im anderen dagegen eine Produktgruppe **100'** liegt, dient lediglich der Veranschaulichung, wird aber kaum im realen Betrieb gemischt so auftreten, zumal für eine ganze Produktgruppe **100'** häufig - wie dargestellt - ein in Durchlaufrichtung 10a längeres Gefach 4, also ein größerer Abstand zwischen den Mitnehmern 3, benötigt wird.

**Figur 1a** zeigt ferner, dass über die Förderstrecke 27, also in Durchlaufrichtung mindestens vom Auflegen der Produkte 100 auf der Auflagefläche 15 durch die Picker 20 bis zur Abgabe der Produkte 100 an die Schlauchbeutel-Baugruppe 1, vorzugsweise zwar die Zufuhrkette 2, an der die Mitnehmer 3 befestigt sind, durchgeht und über die beiden Umlenkrollen 2a, b, von denen eine angetrieben ist, umläuft.

Die beidseits der umlaufenden Mitnehmer 3 angeordneten Auflage-Teile 15a, b, nämlich die Auflage-Bänder 15a, b, sind dagegen vorzugsweise in Durchlaufrichtung 10a jeweils in zwei separate, endlos umlaufende, Auflage-Abschnitte 15b1, 15b2 bzw. 15a1, 15a2 unterteilt mit jeweils einer Lücke 13 dazwischen und können dadurch mit unterschiedlichen Geschwindigkeiten laufen, indem sie beispielsweise unabhängig voneinander angetrieben werden und in ihrer Umlaufgeschwindigkeit steuerbar sind, wobei die Übergangsstelle, die Lücke 13, am besten in der Vergrößerung der **Figur 1a1** der **Figur 1a** und in der Aufsicht der **Figur 1b** zu erkennen ist.

Dadurch können beispielsweise die stromaufwärtigen, insbesondere parallel und synchron zueinander laufenden, Auflage-Abschnitte 15b2 bzw. 15a2 synchron mitlaufend mit den Mitnehmern 3 bewegt werden, die stromabwärtigen Auflage-Abschnitte 15b1 bzw. 15a1 dagegen etwas langsamer laufen als die Mitnehmer 3.

Denn wie die **Figur 1a** zeigt, müssen die Roboter oder Picker 20 die Produkte 100 mittels eines Roboter-Werkzeuges 21 jeweils in ein Gefach 4 zwischen zwei Mitnehmern 3 einsetzen, was zur Sicherheit hier in der Mitte des Gefaches 4 geschieht, also das Produkt einen Abstand zum nachfolgenden Mitnehmer 3 besitzt.

Erst im vorderen, stromabwärtigen Auflage-Abschnitt der insbesondere parallel und synchron zueinander laufenden 15b1 bzw. 15a1 laufen die Mitnehmer 3 relativ zu den Produkten 100, und erreichen dadurch das vor ihnen liegende Produkt und schieben es vor sich her, wodurch eine in Längsrichtung eindeutige Positionierung der Produkte 100, nämlich anliegend an der Vorderseite der Mitnehmer 3, der Kontaktfläche 43, erreicht wird.

Dies ist insbesondere dann wichtig, wenn Produkt-Stapel gebildet werden sollen, denn die Produkte 100 werden beim Aufeinanderstapeln durch die Picker 20 häufig nicht exakt übereinander positioniert sein, sondern es wird bewusst das nächsthöher liegende Produkt entgegen der Durchlaufrichtung über das darunter befindliche Produkt überstehend vom Roboter abgelgt und danach erst durch den von hinten anschiebenden Mitnehmer 3 in eine zumindest in Längsrichtung 10 übereinander fluchtende Stapel-Lage zueinander gebracht.

Gegen Ende der Förderstrecke **27** der Zufuhrkette **2,** also der Strecke, über die sich die Mitnehmer **3** der Zufuhrkette **2** bewegen können, tauchen die Mitnehmer **3** durch das Herumführen um die stromabwärtige Umlenkrolle **2a** nach unten weg und verlieren dadurch den Kontakt zu dem vor ihm hergeschobenen Produkt **100.**

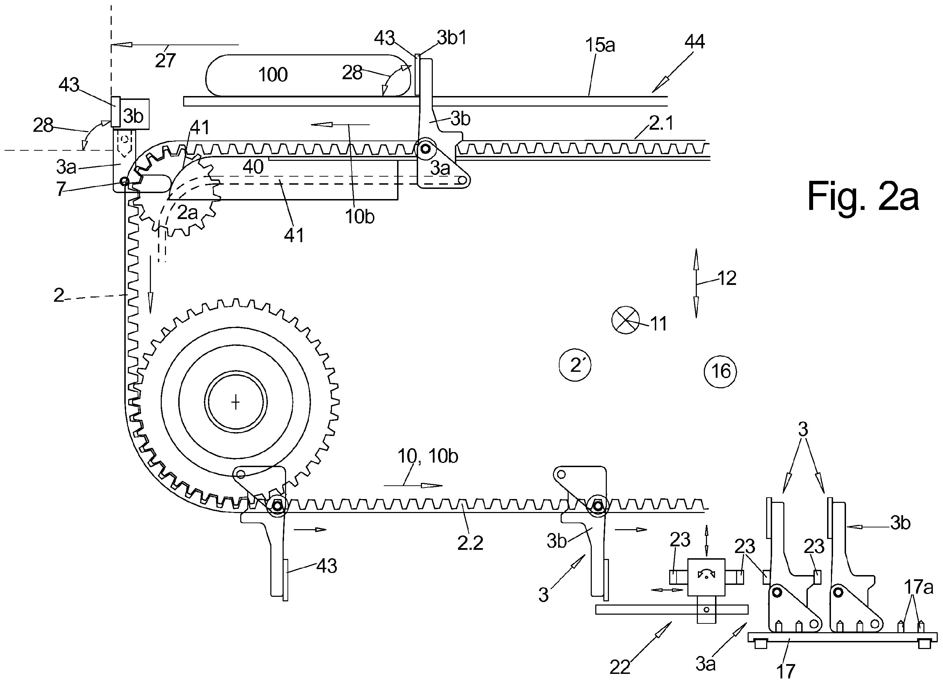

Wie **Figur 1a** zeigt - und später anhand der **Figuren 2a** - **c** näher erläutert wird - soll der Mitnehmer **3** denselben Aufrechtwinkel **28,** den er während des Hauptteiles der Förderstrecke **27** zur horizontalen Ebene eingenommen hat - meist ein rechter Winkel -, beim Abtauchen um die Umlenkrolle **2a** herum nach unten solange beibehalten, wie er noch in Kontakt mit dem Produkt **100** steht, also bis die Oberkante der Kontaktfläche **43** des Mitnehmers **3** unter das Niveau der Auflagefläche für die Produkte abgetaucht ist, um ein Beschädigen des Produktes dabei zu vermeiden.

Wie am besten **Figur 1b** in der Aufsicht zeigt, schiebt der nach unten abtauchende Mitnehmer **3** am Ende der Förderstrecke **27** der Zufuhrketten-Einheit **44** das Produkt **100** auf eine Ablagefläche **29,** wobei er vorzugsweise durch eine heckseitige Ausnehmung der Ablagefläche **29** abtaucht, die in der nachfolgenden Schlauchbeutel-Baugruppe **1** feststehend montiert ist, und sich stromabwärts der Auflage-Teile **15a,** b befindet, und vorzugsweise auf gleicher Höhe oder geringfügig niedriger positioniert ist als die Auflage-Teile 15a, b.

Der Zweck der nachfolgend dargestellten Schlauchbeutel-Baugruppe **1** besteht darin, die von der Vorratsrolle 30 zugeführte Folienbahn 99 mit ihren beiden seitlichen Rändern 99a, b zunächst mittels einer Längs-Siegelnaht 97 zu einem Folienschlauch und danach durch in Abständen aufgebrachte Quer-Siegelnähte 98 zu Schlauchbeuteln 96 zu formen, in denen sich wenigstens je ein Produkt 100 befindet.

Dies wird erreicht mit
- einer Längs-Siegeleinheit **1a,** umfassend eine Schlauchbeutelplatte 31 sowie Siegelrollen 32, die um senkrecht stehende Rotationsachse 32' rotieren und
- einer Quer-Siegeleinheit **1b** umfassend Quer-Siegelwalzen 33, die um in Querrichtung 11 verlaufende Rotationsachsen 33' rotieren mit daran angeordneten Siegelvorsprüngen 34,
was jedoch für die vorliegende Erfindung nicht relevant ist.

Die **Figuren 2a****-d, 3a-c** und **4a-c** zeigen die Gestaltung und Funktion der Zufuhrkette **2** und insbesondere der gesamten Zufuhrketten-Einheit **44,** an der die Mitnehmer **3** befestigt sind.

Die **Figur 2a** zeigt einen Teil der Zufuhrketten-Einheit **44,** nämlich das Ende der Förderstrecke **27** der endlos umlaufenden Zufuhrkette **2** mit Blick auf deren Umlaufebene **2'.**

Die Zufuhrkette **2** - mit diesem Begriff sollen alle geeigneten Förderelemente umfasst sein - ist in diesem Fall als Zahnriemen ausgebildet und das horizontal laufende Obertrum **2.1** wird am Ende der Förderstrecke **27** über eine erste Umlenkrolle **2a** in diesem Fall im rechten Winkel nach unten umgelenkt und über eine etwa darunter angeordnete weitere Umlenkrolle **2b** wiederum horizontal umgelenkt als Untertrum **2.2.**

Die Mitnehmer **3** ragen in der Umlaufebene **2'** von der Zufuhrkette **2** nach außen ab, und entlang des Obertrums **2.1** in diesem Fall senkrecht nach oben.

Sie erstrecken sich dabei durch einen am besten in **Figur 1b** sichtbaren Schlitz **25,** der in Längsrichtung **10** verlaufend zwischen den seitlich davon angeordneten Auflageteilen, den Auflagebändern **15a,** b gebildet wird, bis über die Oberseite der Auflageflächen **15a,** b hinaus und können dadurch die im Bereich darüber in Querrichtung **11** über den Schlitz **25** hinweg auf den Auflageteilen **15a,** b liegenden Produkte 100 vorwärts schieben, in diesem Fall in Durchlaufrichtung 10a nach links.

Wenn diese Mitnehmer **3** um die Umlenkrolle **2a** am Ende des Obertrums **2.1** in Laufrichtung **10a** herumgeführt werden, würden sie bei unbeweglicher Befestigung an der Zufuhrkette 2, hier konkret am Zahnriemen **2,** mit ihrer in Durchlaufrichtung 10a nach vorn gerichteten Kontaktfläche **43** eine Schwenkbewegung um den Mittelpunkt der Umlenkrolle **2a** vollziehen, und sich damit die Kontaktfläche **43** zunehmend schräg stellen und in diesem Bereich zunehmend mit ihrer Oberkante schräg oben gegen die Rückseite des Produktes **1** drücken, und an diesem entlang nach unten schaben, was die Produkte **100** beschädigen kann.

Um zu erreichen, dass die beim Umlaufen um diese Umlenkrolle 2a nach unten abtauchenden Mitnehmer 3 bis zum Abtauchen unterhalb der Höhe der Auflage-Teile 15a, b ihren Aufrechtwinkel 28 zwischen der Kontaktfläche 43 und der Horizontalen beibehalten, sind die Mitnehmer 3 zunächst einmal an der Zufuhrkette **2** gelenkig um eine in Querrichtung 11 verlaufende Schwenkachse 7 ausgebildet.

Die Mitnehmern 3 können hinsichtlich ihrer leicht lösbaren Befestigung an der Zufuhrkette 2 - beispielsweise um Abstand, Größe und Form der Kontaktflächen **43** je nach zu handhabendem Produkt **100** anpassen zu können - unterschiedlich ausgebildet sein:

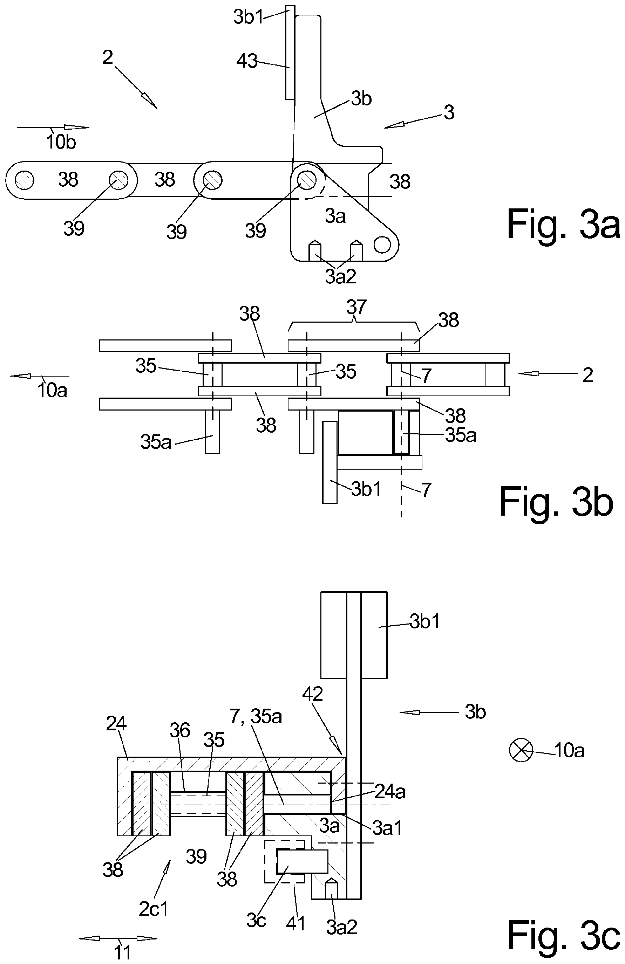

Die **Figuren 3a** **bis c** zeigen in der Seitenansicht, in der Aufsicht und in Durchlaufrichtung 10a eine Lösung, bei der für das Auswechseln der Mitnehmer 3 jeweils der gesamte Mitnehmern 3 von der Zufuhrkette 2 leicht lösbar ist:
Der Mitnehmern 3 ist zwar aus zwei separaten Teilen hergestellt, die miteinander verschraubt sind, nämlich das meist aus Kunststoff bestehende Basis-Teil 3a und das daran befestigte, aus Edelstahl-Blech bestehende Mitnehmer-Teil 3b.

Als Zufuhrkette 2 ist in diesem Fall eine Rollenkette 2, bei der der in Querrichtung 11 verlaufende Kettenbolzen 35, die beidseits die jeweils in Längsrichtung überlappenden Kettenwangen 38 miteinander verbinden, im mittleren Bereich, also zwischen den beiden jeweils innenliegenden Kettenwangen 38, von einer Steghülse 36 umgeben ist, um die Gleiteigenschaften der Kette zu verbessern.

Für ein in Querrichtung 11 von der Seite her erfolgendes Aufstecken der Mitnehmer 3 ist der Kettenbolzen 35, insbesondere alle Kettenbolzen 35, in Querrichtung 11 über die eigentliche Kette hinaus einseitig in Form eines Bolzen-Fortsatzes 35a verlängert. Im Basis Teil 3a ist eine entsprechende, zur Zufuhrkette 2 hin offene Bolzen-Öffnung 3a1 für diesen Zweck vorgesehen, die vorzugsweise als Durchgangsöffnung ausgebildet ist, so dass nach dem auf stecken der Bolzen fort Satz 35a als Schwenkachse 7 für den Mitnehmer dient. Von dem Basisteil 3 ragt in der Saison 11 in Richtung Zufuhrkette 4 ein für uns Bolzen 3c ab, der jedoch in Querrichtung 11 nicht weiter vorsteht als das Basis Teil 3a um die Bolzen-Öffnung 3a1 herum.

Auf der im montierten, also aufgeschobenen, Zustand des Mitnehmers 3 von der Zufuhrkette 2 abgewandten Seite ist das Mitnehmer-Teil 3b angeschraubt,, also nicht leicht lösbar befestigt - weshalb in aller Regel der Mitnehmer 3 im ganzen gehandhabt, also an der Zufuhrkette 2 montiert oder von dieser demontiert, wird -, und in dessen oberen Endbereich die in Querrichtung 11 verlaufende Schubplatte 3b1, die breiter ist als der Rest des Mitnehmerteiles 3b. Die Ketten-abgewandte Seite des Basisteiles 3a ist so gestaltet, dass im oberen Bereich und auch noch im Bereich der Bolzen-Öffnung 3a1 ein Abstand 42 zum Mitnehmer-Teil 3b hin verbleibt.

Dadurch kann eine umgekehrt U-förmige, in Längsrichtung 10 verlaufende, Obertrum-Abdeckung 24 auf das Obertrum 2.1 der Zufuhrkette 2 so aufgesetzt werden, dass von den beiden nach unten weisenden, frei auslaufenden Seitenschenkeln einer in den Abstand 42 hineinragt und der andere in auf der davon abgewandten Außenseite der Zufuhrkette 2 nach unten ragt, so dass kein Schmutz von oben in das Obertrum 2.1 gelangen kann.

Der in den Abstand 42 hineinragende frei endende Schenkel dient gleichzeitig als Mitnehmer-Führung 24a, die das abziehen des Mitnehmers 3 von dem Bolzen-Fortsatz 35a verhindert, wobei im Umlauf der Zufuhrkette 2 abseits der Obertrum -Abdeckung 24 überall eine solche Mitnehmer-Führung 24 a vorhanden ist.

Wie die **Figuren 3a und 3c** zeigen, sind ferner in der Unterseite des BasisTeiles 3a in Durchlaufrichtung 10a beanstandet zwei nach unten offene Ablage-Öffnungen 3a 2 vorhanden, deren Zweck später beschrieben wird.

Ein so gestaltet der Mitnehmern 3 kann um das stromabseitige umlenken Ritzel 2a des Oberzentrums 2.1 unter Beibehaltung seines aufrecht-Winkels 28 herumgeführt werden, indem es mit seinem Führungs-Bolzen 3c in diesem Bereich in einer in dieser Seitenansicht betrachtet entsprechend geformten, zum Führungs-Bolzen 3c hin offenen, Führungs-Nut 41 geführt wird, wie sie in **Figur 2a** links oben gestrichelt dargestellt ist.

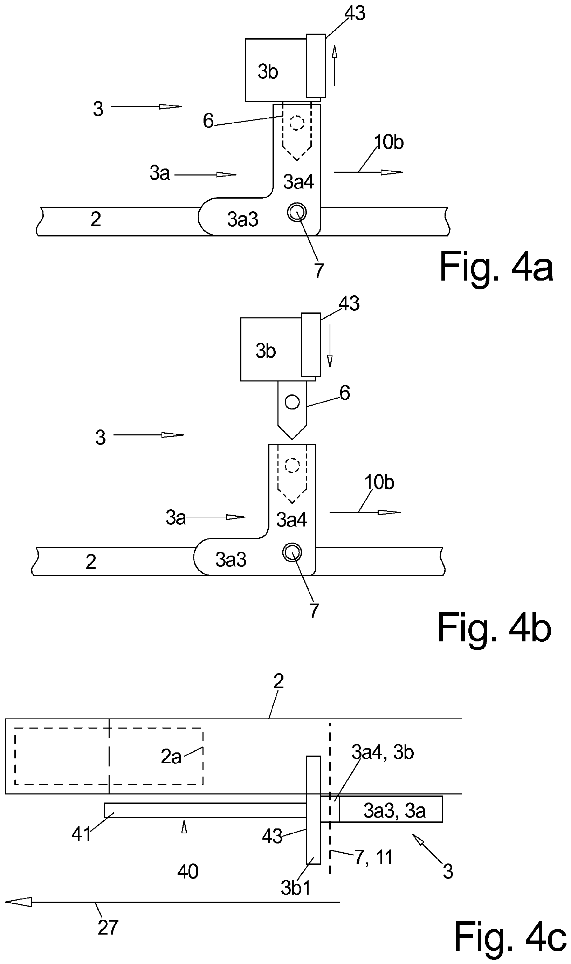

Bei der anderen Bauform der Mitnehmern 3 gemäß der **Figuren 4a** **bis c** sind die Mitnehmer **3** zweiteilig ausgebildet mit einem Basisteil **3a,** welches über die Schwenkachse **7** an der Zufuhrkette **2** befestigt ist und das Mitnehmerteil **3b,** welches sich ganz oder überwiegend oberhalb der Auflageteile **15a,** b befindet und am Basisteil **3a** leicht lösbar befestigt ist.

In diesem Fall ist das Mitnehmerteil **3b** von oben in die obere Stirnfläche des Basisteiles **3a** einsteckbar und verrastbar - wie in **Figur 4b** auch in getrenntem Zustand dargestellt -, indem das Mitnehmerteil **3b** an seiner Unterseite einen Einsteckzapfen **6** aufweist, der in eine entsprechende Ausnehmung des Basisteiles **3a** passt, und zwischen beiden ist eine Rastvorrichtung **36** vorhanden, beispielsweise eine bekannte, mittels Federkraft vorgespannte Rastkugel, die wahlweise im Basisteil **3a** oder im Mitnehmerteil **3b** vorhanden sein kann und in eine entsprechende Rastvertiefung des anderen Teiles hinein mittels Federkraft vorgespannt ist und einrastet.

Das Basisteil **3a** ist in der Blickrichtung der **Figur 4a und 4b****,** also in Seitenansicht auf die Umlaufebene **2'** der Zufuhrkette **2,** der Querrichtung **11,** L-förmig ausgebildet mit einem nach oben, also bzgl. der umlaufenden Zufuhrkette **2** nach außen, weisenden Einsteckschenkel **3a4,** in dem sich die Aufnahme- und Rastvorrichtung für das Mitnehmerteil befindet, und einen dazu - vorzugsweise an dessen unterem Ende - im Winkel sich etwa in Verlaufsrichtung der Zufuhrkette **2** entgegen deren Laufrichtung **10a** erstreckenden Führungsschenkel **3a3.**

Der Mitnehmer **3,** hier das Basisteil **3a,** kann in einer Aussparung der Zufuhrkette **2** angeordnet sein, ist jedoch vorzugsweise in der Aufsicht betrachtet seitlich an dieser befestigt, wie die Aufsicht der **Figur 4c** zeigt.

Gegen Ende der Förderstrecke **27** ist auf Höhe der Unterkante des Führungsschenkels **3a1** eine Kulissenführung **40** angeordnet, deren Oberseite und die in Richtung Ende der Förderstrecke 27 daran anschließende konvex gekrümmte Stirnfläche einer Führungskurve **41** darstellen, an der zunächst die Unterkante und dann das hintere, vorzugsweise gerundete, freie Ende des Führungsschenkels **3a1** anliegt und so geführt wird, dass der Mitnehmer **3** seine Winkelstellung bezüglich der Schwenkachse **7** beibehält - und damit der Aufrecht-Winkel **28** ebenfalls beibehalten wird - bis die Oberkante des Mitnehmers **3,** hier also des Mitnehmerteiles **3b,** unter das Niveau der Oberseite der Auflageteile **15a,** b abgetaucht ist und den Kontakt mit dem bisher vor sich her geschobenen Produkt **100** verliert.

Dadurch sind Beschädigungen an der Rückseite des Produktes **100** durch das Mitnehmerteil **3b** vermieden.

Wie **Figur 2a** auch zeigt, enden die Auflage-Teile **15a,** b noch vor Ende der Förderstrecke **27** in Durchlaufrichtung **10a,** um den Mitnehmerteil **3b** des Mitnehmers **3,** welcher gemäß **Figur 3c****,** **4c** in aller Regel breiter ist als der Schlitz **25,** in dem der Mitnehmer **3** läuft, nach unten abtauchen kann.

Stromabwärts hinter dem Ende der Auflageteile **15a,** b befindet sich auf gleichem oder geringfügig niedrigerem Niveau die stillstehende Auflagefläche **29,** auf welche das Produkt **100** vom Mitnehmer **3** am Ende der Förderstrecke **27** aufgeschoben wird, bevor der Mitnehmer **3** den Kontakt zum Produkt **100** verliert, um von dort mit Hilfe der an ihm anliegenden, in **Figur 2a** nicht dargestellten, Folienbahn **99** weiter transportiert zu werden Die **Figuren 2a** **bis d** zeigen unterschiedliche Funktionsstellungen der Zufuhrketten-Einheit 44 betrachtet in Durchlaufrichtung 10b der Mitnehmer 3, geschnitten in einer Ebene lotrecht zur Durchlaufrichtung 10 an der Lücke 13, wie in der **Figur 1a1** als Schnittlinie II - II eingezeichnet:

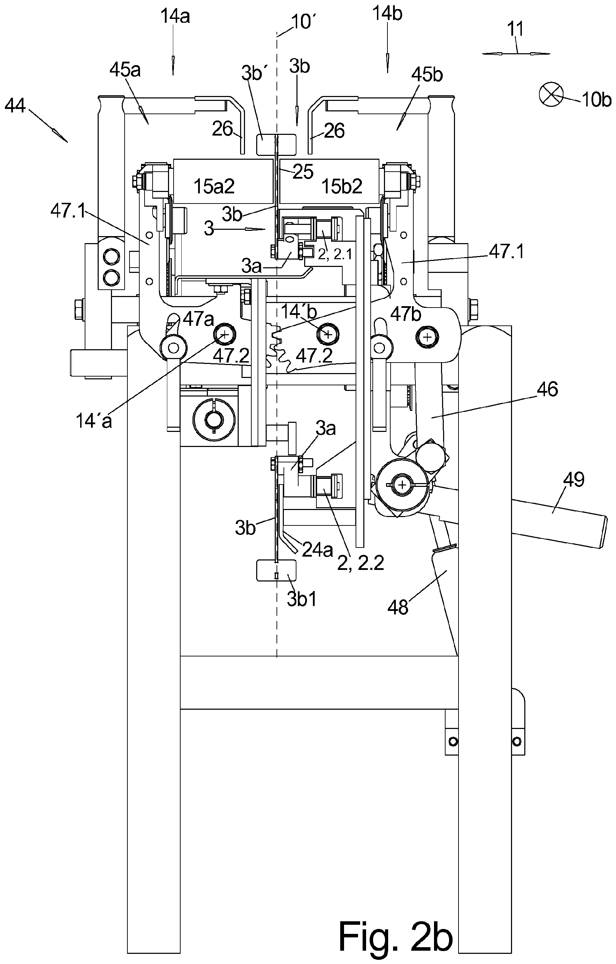

**Figur 2b** zeigt die Betriebsstellung:
Zu erkennen ist das Obertrum 2.1 und das Untertrum 2.2 der Zufuhrkette 2, und oberhalb des Obertrums 2.1 die beiden Auflage-Bänder 15a2 und 15b2, die in Querrichtung 11 nebeneinander umlaufen in jeweils parallelen Umlaufebenen, sodass in der Querrichtung 11 insbesondere die Oberseiten der Obertrume 2.1 dieser endlos umlaufenden Auflage-Bänder 15a2 und 15b2 miteinander fluchten und in Querrichtung 11 zwischen beiden Auflage-Bänder 15a2 und 15b2der in Längsrichtung 10 verlaufende Schlitz 25 zum Hindurchragen der Mitnehmer 3 vorhanden ist:
Während die Zufuhrkette 2 an ortsfesten Positionen im Gestell der Maschine gelagert ist, sind die beiden in Durchlaufrichtung hinteren Auflage-Bänder 15a2 und 15b2, also Abschnitte 15a2 und 15b2 - ebenso die der vorderen Abschnitte 15a1, 15b1 - in jeweils einer Schwenkeinheit 45a, b gelagert, die jeweils um eine in Durchlaufrichtung 10b verlaufende Schwenkachse 14'a, 14'b schwenkbar sind.

Jede der Schwenkeinheiten 45a, b umfasst wenigstens einen, meist in Durchlaufrichtung 10 mindestens zwei hintereinander, angeordnete Schwenkhebel 47a, b, die vorzugsweise L-förmig - betrachtet in Durchlaufrichtung 10b - ausgebildet sind. Der eine Schenkel 47.1 ragt seitlich außerhalb der von der Längsmittelebene 10' abgewandten Seite jeweils eines der Auflage-Bänder 15a 2,15b2 nach oben, die daran fliegend, also einseitig auskragend, zur Längsmittelebene 10' abragen.

An das untere Ende dieses aufrechten Schenkels 47.1 schließt sich ein von dort horizontal in Richtung Längsmittelebene 10' abragender Schenkel 47.2 an, wobei deren zum anderen horizontalen Schenkel hin weisende Enden jeweils verzahnt sind und miteinander kämmen, wobei die Verzahnung auf einem Kreisbogen um die vorzugsweise durch den jeweiligen horizontalen Schenkel 47.2 hindurch verlaufende Schwenkachse 14'a, 14'b angeordnet ist.

Von der in **Figur 2b** dargestellten Betriebsstellung lassen sich die beiden Schwenkeinheiten 45a, b mit ihrem oberen Bereich nach außen schwenken durch aktives Verlagern nur eines der beiden Schwenkhebel 47a, b um dessen Schwenkachse herum, hier bewirkt durch einen Handhebel 49 und unterstützt durch einen Dämpfer 48 und/oder eine Gasdruckfeder 48, und einen dazwischen angeordneten, vermittelnden Hebel 46, der dann der Verzahnung-Verbindung den anderen Schenkel analog umgekehrter Schwenkrichtung mit bewegt.

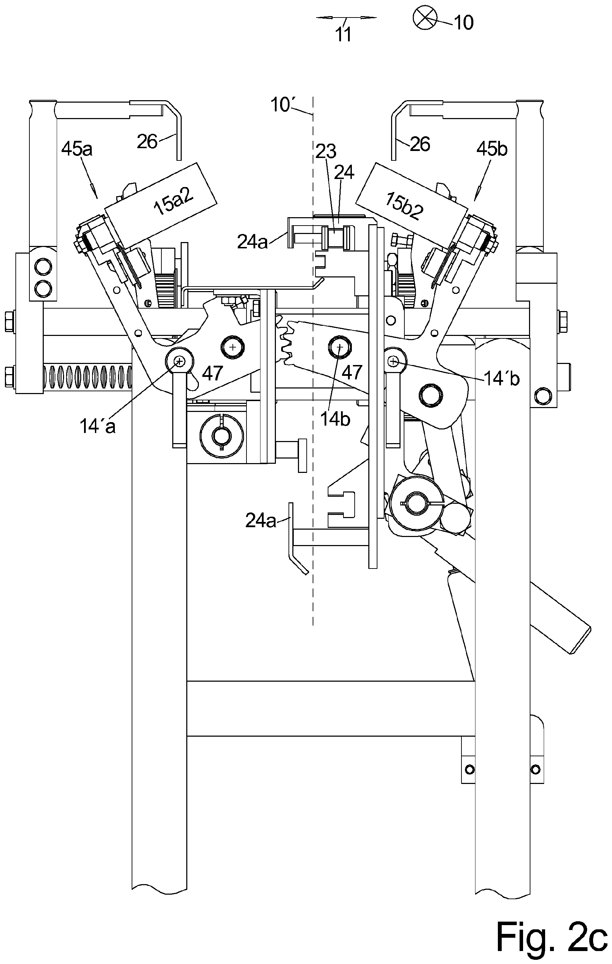

Auf diese Art und Weise können die beiden Schwenkeinheiten 45 a, b in die in **Figur 2c** dargestellte Reinigungsstellung verbracht werden, indem der gegenseitige Abstand der beiden gesamten Auflage-Bänder 15a2,15b2, die nun mit der Oberseite ihres Obertrumes schräg nach oben zur Längsmittelebene 10' hinweisen, sodass mit einem Dampfstrahler oder einem anderen Reinigungsgerät auch der Bereich unterhalb dieser Auflage-Bänder 15a2,15b2 erreicht werden kann.

Gleichzeitig oder vor dem Verschwenken in die Reinigungsstellung müssen auch die in Figur 2b sichtbaren, beidseits der Mitnehmer 3 angeordneten und bis knapp oberhalb der Auflage-Bänder 15a2,15b2 etwa senkrecht angeordneten, von oben herabreichenden Seitenführungen 26 verlagert werden, da sich diese entlang wenigstens eines Teils der Zufuhrstrecke oder erstrecken, um eine Kollision mit den hochschwenkenden Auflage-Bändern 15a2, 15b2 zu vermeiden.

Wie in **Figur 2c** erkennbar, erfolgt dies durch lineares nach außen fahren der Seitenführung mit 26 in Querrichtung 11 von der Längsmittelebene 10' weg, was mittels einer Zahnstangen/Ritzel-Antriebes leicht möglich ist, und notfalls durch eine zusätzliche Bewegung der Seitenführungen 26 nach oben.

Wie **Figur 2c** ferner erkennen lässt, bleibt die Zufuhrkette 2 währenddessen, als auch in der Reinigungsstellung, unverändert in Position

Da in **Figur 2c** aus Übersichtlichkeitsgründen keine Mitnehmer 3 mehr dargestellt sind, und auch das Untertrum 2.2 der Zufuhrkette 2 zeichnerisch weggelassen ist, ist am Obertrum 2.1 gut zu erkennen, dass das Obertrum 2.1 durch eien von oben darauf aufgesetzte, nach unten offene, U-förmige Obertrum-Abdeckung 24 gut geschützt ist gegen von oben herabfallende Verunreinigungen. Falls notwendig, kann zum Reinigen auch diese Obertrum-Abdeckung 24 vom Obertrum 2.1 abgenommen werden.

Wie am besten **Figur 2b** erkennen lässt, greift diese Obertrum-Abdeckung 24 mit einem ihrer seitlichen, nach unten frei auslaufenden Schenkel in einen entsprechenden Abstand 42 zwischen dem Basisteil 3a1 und dem Mitnehmer-Teil 3b des Mitnehmers 3 ein und verhindert dessen ungewolltes Abziehen in Querrichtung 11 von dem einseitigen Überstand 35a des Kettenbolzens 35.

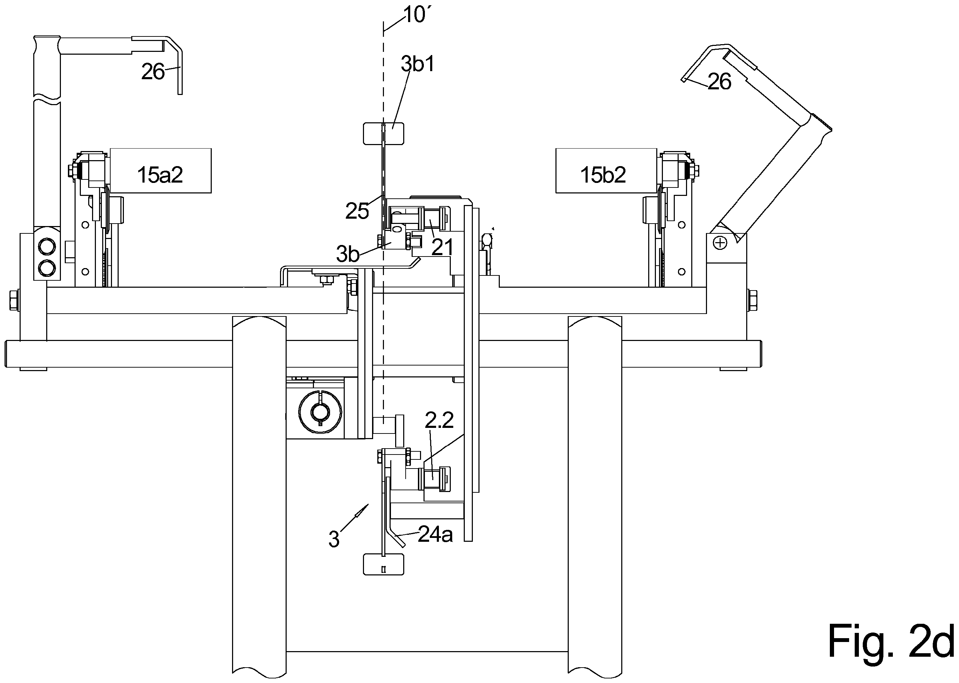

Die **Figur 2d** zeigt eine andere Möglichkeit, die Zufuhrketten-Einheit 44 in eine Reinigungsstellung zu bringen, also die beiden Auflage-Bänder 15a, b, also insbesondere 15a2, 15b2, auf Abstand zu bringen:
Zu diesem Zweck ist jedes dieser beiden Auflage-Bänder 15a2, 15b2 in einer Querverschiebe-Einheit und 45a, 45b angeordnet und gelagert, die von der in Querrichtung 11 bis auf den Schlitz 25 aneinander angenäherten Betriebsstellung durch lineares Verfahren nach außen auseinander bewegt werden können.

Damit in dieser Stellung die seitlich oberhalb der Auflage-Bänder 15a, b, insbesondere 15a2, 15b2, stehenden Seitenführungen 26 beim Reinigungsprozess nicht stören, können diese entweder gegenüber dem Auflage-Band zum Beispiel 15a2 zusätzlich nach oben verfahren werden - wie in der linken Bildhälfte dargestellt - oder gegenüber dem Auflage Band zum Beispiel 1 b2 nach außen geschwenkt werden - wie in der rechten Bildhälfte dargestellt

In den **Figuren 2b** **bis d** ist jeweils zu erkennen, dass entlang des Untertrums verlaufend ein etwa senkrecht stehendes Blech als Mitnehmer-Führung 24a montiert ist, um entlang des Untertrums 2.2 ein Abrutschen der Mitnehmer 3 von der Zufuhrkette 2 zu vermeiden

Um am Untertrum 2.2 Mitnehmer 3 automatisch mittels eines Werkzeugwechsler 22 - wie nachfolgend anhand **Figur 2a** beschrieben - zu wechseln, muss diese Mitnehmer-Führung 24a am Untertrum 2.2 außer Funktion gebracht werden können, beispielsweise soweit nach unten verfahren werden können, dass ein abziehen des Mitnehmers 3 in Querrichtung 11 von der Zufuhrkette 2 möglich ist.

Dies ist automatisch durchführbar und bereits geschehen wenn der Werkzeugwechsler 22 zum Einsatz kommt wie er in Figur 2a dargestellt ist:
Das Ziel besteht darin, dass der Werkzeugwechsler 22 die Mitnehmer 3 einzeln von der Zufuhrkette 2, und zwar deren Untertrum 2.2, in diesem Fall in Querrichtung 11 abzieht und in einer Ablagekassette 17 formschlüssig absetzt.

Zu diesem Zweck muss zunächst einmal eine Relativbewegung zwischen dem Wechselwerkzeug 23 des Werkzeugwechsels 22 und der Ablagekassette 17 möglich sein, vorzugsweise in mindestens zwei, besser allen drei Raumrichtungen, nämlich einerseits der Aufsteck-Richtung, hier von oben nach unten, auf die Ablagekassette 17, und in Querrichtung 11 zum Anfahren unterschiedlicher Ablagepositionen in der Ablagekassette 17, welche etwa horizontal angeordnet ist.

Vorzugsweise ist hier das Ablagekassette 17 horizontal angeordnet und die Ablagepositionen, jeweils konkretisiert durch zwei im richtigen Abstand zueinander nach oben aufragende Ablagezapfen 17a, b, wobei die Ablagepositionen meist in Querrichtung 11 und in Durchlaufrichtung 10 in einer zweidimensionalen Matrix angeordnet sind.

Vorzugsweise wird ein Mitnehmer 3 von der Zufuhrkette 2 an eine vorgegebenen Wechselposition gefahren und angehalten für das Demontieren, und an dieser Position fährt das Wechselwerkzeug 23, hier ein 2-zinkiger Greifer 23, an den Mitnehmer 3 heran und ergreift den Mitnehmer 3, hier an dessen Mitnehmer-Teil 3b, zieht es in Querrichtung 11 von der Zufuhrkette 2 ab, und verfährt es über die gewünschte Ablageposition in der Ablagekassette 17.

Auf dem Weg dorthin wird der Mitnehmer 3 gedreht, sodass er mit seinem Basisteil 3a nach unten weist und mit den dort angeordneten Ablage-Öffnungen 3a2 über den Ablagezapfen 17a steht und auf diese aufgesteckt werden kann.

Das Anbringen neuer Mitnehmer 3, zur Verfügung gestellt auf einer ebensolchen Ablagekassette 17, erfolgt analog umgekehrt.

Die Ablagekassette 17 wird auf den dargestellten Führungen in Querrichtung 11 in die richtige Betriebsposition unterhalb des Untertrums 2.2 eingeschoben und verriegelt, jedoch könnte eine der Relativbewegungen, beispielsweise die Relativ-Verfahrung in Querrichtung 11, statt von dem Wechselwerkzeug 23 auch durch die Ablagekassette 17 und einen entsprechenden Antrieb an der Ablagekassette 17 realisiert werden, und ebenso die notwendige Bewegungsmöglichkeit in der Vertikalen 12.

### BEZUGSZEICHENLISTE

- **1**: Schlauchbeutel-Baugruppe
- **1a**: Längssiegel-Einheit
- **1b**: Quersiegel-Einheit
- **2**: Zufuhrkette
- **2.1**: Obertrum
- **2.2**: Untertrum
- **2**a, b: Umlenkrolle
- **2'**: Umlaufebene
- **3**: Mitnehmer
- **3a**: Basisteil
- **3a1**: Bolzen-Öffnung
- **3a2**: Ablage-Öffnung
- **3a3**: Führungsschenkel
- **3a4**: Einsteckschenkel
- **3b**: Mitnehmerteil
- **3b1**: Schubplatte
- **3c**: Führungs-Bolzen
- **4**: Gefach
- **5**: Steuerung
- **6**: Einsteckzapfen
- **7**: Schwenkachse
- **8**: Produktband
- **9**: Längsabstand
- **10**: Längsrichtung
- **10a**: Durchlaufrichtung
- **10'**: Längsmittelebene
- **11**: Querrichtung
- **12**: vertikale Richtung
- **13**: Lücke
- **14a, b**: Auflage-Einheit
- **14'a,** b: Schwenkachse
- **15**: Auflagefläche
- **15a, b**: Auflage-Teil, Auflageband, Auflagefläche
- **15a1, b1**: Auflage-Abschnitt
- **16**: Innenraum
- **17**: Ablage-Kassette
- **17a**: Ablage-Zapfen
- **18**: Umlenkrolle
- **19a, b**: Ablage-Führung
- **20**: Umsetz-Roboter, Picker
- **21**: Roboter-Werkzeug, Sauger
- 22: Mitnehmer-Wechsler
- 23: Wechsel-Werkzeug
- 23': Werkzeug-Schwenkachse
- 24: Obertrum-Abdeckung
- 24a: Mitnehmer-Führung
- **25**: Schlitz
- **26**: Seitenführung
- **27**: Förderstrecke
- **28**: Aufrecht-Winkel
- **29**: Ablagefläche
- **30**: Vorratsrolle
- **31**: Schlauchbeutelplatte
- **32**: Siegelrollen
- **32'**: Rotationsachse
- **33**: Quer-Siegelwalze
- **33'**: Rotationsachse
- **34**: Siegelvorsprung
- **35**: Kettenbolzen
- **36**: Steghülse
- **37**: Kettenglied
- **38**: Kettenwange
- **39**: Kettensteg
- **40**: Kulissenführung, Mitnehmerführung
- **41**: Führungskurve, Führungsnut
- **42**: Abstand
- **43**: Kontaktfläche
- **44**: Zufuhrketten-Einheit
- 45a, b: Schwenkeinheit, Querverschiebe-Einheit
- 46: Hebel
- 47a, b: Schwenkhebel
- 47.1: aufrechter Schenkel
- 47.2: horizontaler Schenkel
- 48: Dämpfer
- 49: Handhebel

- **96**: Schlauchbeutel
- **97**: Längs-Siegelnaht
- **98**: Quer-Siegelnaht
- **99**: Folienbahn, Folienschlauch
- **99a,b**: Längs-Rand
- **100**: Produkt
- **100'**: Produkt-Gruppe

## Patentansprüche

1. **Zufuhrketten-Einheit** (44) zum Vorwärtsbewegen von Produkten (100) über eine Förderstrecke (27) auf einer Auflagefläche (15) mit
- einer sich in einer Umlaufebene (2'), die sich in Längsrichtung (10) erstreckt, umlaufenden, endlosen Zufuhrkette (2) mit daran in Längsabständen (9) beabstandeten Mitnehmern (3), zum Vorwärtsbewegen der Produkte (100) über die Förderstrecke (27),
- zwei bezüglich der Längsrichtung (10) beidseits der Mitnehmer (3) angeordneten Auflage-Einheiten (14a, b), die jeweils ein endloses, umlaufendes Auflage-Teil (15a, b), insbesondere Auflage-Band (15a, b), umfassen, welche gemeinsam die Auflagefläche (15) bilden,
- wobei die einteiligen oder mehrteiligen Mitnehmer (3) jeweils wenigstens teilweise leicht lösbar an der Zufuhrkette (2) befestigt sind, so dass sie insbesondere ohne Demontage der Auflagefläche (15) von der Zufuhrkette (2) demontiert und an dieser montiert werden können,
- einer Steuerung (5) zum Steuern der Bewegungen wenigstens aller beweglichen Teile der Zufuhrketten-Einheit (44),
wobei- die Mitnehmer (3) radial über den Ketten-Umlauf vorstehen,
- das Obertrum der Auflage-Teile (15a, b) jeweils oberhalb des Obertrums (2.1) der Zufuhrkette (2) so angeordnet ist, dass sich die Mitnehmer (3) durch den Schlitz (25) zwischen den Auflage-Teilen (15a, b) hindurch nach oben erstrecken,
**dadurch gekennzeichnet, dass**
- auch das Untertrum der Auflage-Teile (15a, b) jeweils oberhalb des Obertrums (2.1) der Zufuhrkette (2) so angeordnet ist, dass sich die Mitnehmer (3) durch den Schlitz (25) zwischen den Auflage-Teilen (15a, b) hindurch nach oben erstrecken,
- beide der endlosen, umlaufenden Auflage-Teile (15a, b) quer zur Umlaufebene (2') zwischen einer Betriebsstellung und einer Reinigungsstellung in ihrem gegenseitigen Querabstand verstellbar ausgebildet sind.

2. Zufuhrketten-Einheit nach Anspruch 1,
**dadurch gekennzeichnet, dass**
- die gesamten Auflage-Einheiten (14a, b) quer zur Umlaufebene (2') zwischen einer Betriebsstellung und einer Reinigungsstellung in ihrem gegenseitigen Querabstand verstellbar ausgebildet sind,
- insbesondere so, dass dadurch in der Reinigungsstellung seitlich neben dem Obertrum (2.1) der Zufuhrkette (2) ausreichend Platz vorhanden ist, um die Mitnehmer (3) am Obertrum (2.1) von der Zufuhrkette (2) zu demontieren oder zu montieren,
- insbesondere mithilfe der gleichen, lediglich mit einem Wechselwerkzeug versehenen, Roboter, die die Produkte (100) auf der Auflagefläche (15) auflegen.

3. Zufuhrketten-Einheit (44) nach einem der vorhergehenden Ansprüche, **dadurch gekennzeichnet, dass**
die Auflage-Teil (15a, b), insbesondere die gesamten Auflage-Einheiten (14a, b)
- in Querrichtung (11) zur Umlaufebene (2') von der Mitnehmer-Ebene (3') weg verfahrbar sind.
oder
- um einein Längsrichtung (10) verlaufende, Schwenkachse (14'a, b) verschwenkbar sind..

4. Zufuhrketten-Einheit (44) nach einem der vorhergehenden Ansprüche,
**dadurch gekennzeichnet, dass**
ein Mitnehmer-Wechsler (22) benachbart zum Untertrum (2.2) der Zufuhrkette (2) angeordnet ist, der ein Wechsel-Werkzeug (23) zum Ergreifen, Demontieren und Ablegen wenigstens eines Mitnehmers (3) umfasst.

5. Zufuhrketten-Einheit (44) nach Anspruch 4,
**dadurch gekennzeichnet, dass**
- der Mitnehmer-Wechsler (22) in Längsrichtung (10) fest positioniert ist
und/oder eine an der Zufuhr-Kette (2) angeordnete Kulissen-Führung (40) wenigstens im Bereich des Mitnehmer-Wechslers (22) so bewegbar, insbesondere nach unten weg verfahrbar, ist, dass die Mitnehmer (3) für das Wechsel-Werkzeug (23) zugänglich sind.

6. Zufuhrketten-Einheit (44) nach Anspruch 4 oder 5,
**dadurch gekennzeichnet, dass**
- das Wechsel-Werkzeug (23), insbesondere der gesamte WerkzeugWechsler (22), wenigstens in Querrichtung (11) verfahrbar ist und das Wechsel-Werkzeug (23) um wenigstens eine Werkzeug-Achse (23') schwenkbar ist,
- vorzugsweise das Wechsel-Werkzeug (23) in wenigstens einer Raumrichtung (10, 12) zusätzlich zur Querrichtung (11) verfahrbar ist.

7. Zufuhrketten-Einheit (44) nach einem der vorhergehenden Ansprüche, **dadurch gekennzeichnet, dass**
- jedes der endlosen, umlaufenden Auflage-Teile (15a, b) in Längsrichtung (10) hintereinander aus zwei endlosen, umlaufenden Auflageteil-Abschnitten (15.1a, 15.2a, 15.1b, 15.2b) besteht, die jeweils separat antreibbar und unabhängig voneinander in ihrer Umlaufgeschwindigkeit steuerbar sind und
- insbesondere die Zufuhrkette (2) in Längsrichtung 10) sich über die an gleicher Längsposition vorhandenen Lücken (13) zwischen den beiden linken und rechten Auflageteil-Abschnitten (15.1a, b, 15.2a, b) hinweg erstreckt.

8. Zufuhrketten-Einheit (44) nach einem der vorhergehenden Ansprüche, **dadurch gekennzeichnet, dass**
- die Zufuhrketten-Einheit (44) eine Ablagekassette (17) für Mitnehmer (3) umfasst,
- die Ablagekassette (17) auf Ablage-Führungen (19a, b) in den Greifbereich des Werkzeug-Wechslers (22) einfahrbar is.

9. Zufuhrketten-Einheit nach einem der vorhergehenden Ansprüche, **dadurch gekennzeichnet, dass**
- die Mitnehmer **(3)** wenigstens jeweils wenigstens teilweise derart lösbar direkt oder indirekt so an der Zufuhrkette **(2)** befestigt sind, dass zum Lösen wenigstens eines Teils jedes Mitnehmers **(3)** von der Zufuhrkette **(2)** weder die Zufuhrkette **(2)** aus der sie aufnehmenden Maschine entnommen noch andere Bauteile von der Maschine demontiert werden müssen.
und/oder
- die Mitnehmer **(3)** an in Längsrichtung (**10** b) beanstandeten Aufnahmen der Zufuhrkette **(2)** direkt angesteckt und/oder verrastet sind.

10. Zufuhrketten-Einheit nach einem der vorhergehenden Ansprüche, **dadurch gekennzeichnet, dass**
- die Zufuhrkette (2) als Bolzenkette, insbesondere als Rollenkette, mit einseitig über die eine Kettenwange (38) nach außen vorstehenden Kettenbolzen (35) ausgebildet ist und
- insbesondere die Zufuhrkette **(2)** aus einzelnen, gelenkig miteinander verbundenen, Kettengliedern besteht und die Mitnehmer **(3)** an den als Aufnahmen fungierenden einzelnen Kettengliedern **(37),** insbesondere dem Kettenbolzen (35) einer Bolzen-Kette oder RollenKette, direkt angesteckt oder verrastet sind.

11. Zufuhrketten-Einheit nach einem der vorhergehenden Ansprüche, **dadurch gekennzeichnet, dass**
- entweder der ganze Mitnehmer **(3)**
- oder bei einem mehrteiligen Mitnehmer **(3)**
- entweder dessen Basisteil **(3a)** an der Zufuhrkette **(2)**
- oder dessen Mitnehmer-Teil **(3b)** an dem Basisteil **(3a)** gelenkig um eine quer zur Laufrichtung **(1b)** der Zufuhrkette **(2)** liegende Schwenkachse **(7)** befestigt ist.

12. Zufuhrketten-Einheit (44) nach einem der vorhergehenden Ansprüche, **dadurch gekennzeichnet, dass**
- die Mitnehmer (3) ein Basisteil (3a) zum Befestigen an der Zufuhrkette (2) sowie ein fest damit verbundenes oder daran befestigtes Mitnehmerteil (3b) umfasst, welches sich vom Obertrum (2.1) aus durch den Schlitz (25) zwischen den Auflage-Teilen (15a, b) hindurch erstreckt,
- das Basisteil (3a) insbesondere aus Kunststoff besteht und/oder das Mitnehmerteil (3b) insbesondere aus Edelstahl besteht.

13. Zufuhrketten-Einheit (44) nach einem der vorhergehenden Ansprüche, **dadurch gekennzeichnet, dass**
- die Mitnehmer (3) eine in Querrichtung (11) verlaufende Bolzen-Öffnung (3a1) aufweist, in die der Überstand (35a) eines Kettenbolzens (35) passt.

14. Zufuhrketten-Einheit (44) nach einem der Ansprüche 4-14, **dadurch gekennzeichnet, dass**
- eine auf der von der Zufuhr-Kette (2) abgewandten Seite der daran befestigten Mitnehmer (3) angeordnete Mitnehmer-Führung (24) wenigstens im Bereich des Mitnehmer-Wechslers (22) so bewegbar ist, dass die Mitnehmer (3) für das Wechsel-Werkzeug (23) zugänglich sind,
- insbesondere die Mitnehmer-Führung (24) nach unten weg verfahrbar ist

15. Zufuhrketten-Einheit (44) nach einem der vorhergehenden Ansprüche, **dadurch gekennzeichnet, dass**
- vom Mitnehmer (3) in Querrichtung (11) ein Führungsbolzen (3c) vorsteht, insbesondere in Richtung der Zufuhrkette (2).

16. Zufuhrketten-Einheit (44) nach einem der vorhergehenden Ansprüche, **dadurch gekennzeichnet, dass**
- der Mitnehmer (3) eine Befestigungsvorrichtung eine Ablage-Öffnung (3a2), aufweist zum formschlüssigen, Aufnehmen in einer Ablage-Kassette (17)
- insbesondere in einer solchen Lage, dass die Mitnehmer (3) mit von ihrem Basisteil (3a) nach oben weisendem Mitnehmerteil (3b) in der Ablage-Kassette (17) zu stehen.

17. Zufuhrketten-Einheit (44) nach Anspruch 16,
**dadurch gekennzeichnet, dass**
die wenigstens eine Ablage-Öffnung (3a2) auf der vom Mitnehmerteil (3b) abgewandten Unterseite im Basisteil (3a) angeordnet ist und vorzugsweise eine Sackloch-Öffnung ist.

18. Zufuhrketten-Einheit (44) nach einem der vorhergehenden Ansprüche, **dadurch gekennzeichnet, dass**
- im Bereich des Obertrums (2.1)die Zufuhrkette (2) und wenigstens ein Teil der Basisteile (3a) der daran befestigten Mitnehmer (3) wenigstens auf der Oberseite und den beiden Seiten von einer Obertrum-Abdeckung (24) abgedeckt sind und der Abnehmerteil (3b) jedes Mitnehmers (3) seitlich neben der Obertrum-Abdeckung nach oben ragt.

19. Zufuhrketten-Einheit (44) nach Anspruch 18,
**dadurch gekennzeichnet, dass**
die Obertrum-Abdeckung so ausgebildet ist, dass die Mitnehmer (3) ohne Verlagerung oder Demontage der Obertrum-Abdeckung (24) von der Zufuhrkette (2) abnehmbar sind.

20. Zufuhrketten-Einheit nach einem der vorhergehenden Ansprüche,
**dadurch gekennzeichnet, dass**
eine Kulissenführung **(40)** für die Mitnehmer **(3)** vorhanden ist, sodass beim Abtauchen des entlang des Obertrums **(2.1)** der Zufuhrkette **(2)** herangeführten Mitnehmers **(3)** im Bereich der stromabwärtigen Umlenkrolle **(2a)** die nach vorne gerichtete Kontaktfläche **(43)** des Mitnehmers **(3)** wenigstens über einen anfänglichen Teil des Umlaufes um diese Umlenkrolle **(2a)** seinen lotrecht zur Umlaufebene **(2')** betrachteten, bisherigen Aufrechtwinkel **(28)** gegenüber der Horizontalen im Wesentlichen beibehält.

21. Zufuhrketten-Einheit nach Anspruch 20,
**dadurch gekennzeichnet, dass**
die Kulissenführung **(40)** so ausgebildet und positioniert ist, dass die Kontaktfläche **(43)** ihren Aufrechtwinkel **(28)** im Wesentlichen beibehält, bis die Oberkante des Mitnehmers **(3)** unter die Oberseite der Auflagefläche **(15)** abgesunken ist.

22. Zufuhrketten-Einheit nach einem der Ansprüche 20 oder 21,
**dadurch gekennzeichnet, dass**
- entweder die Kulissenführung **(40)** eine Führungskurve **(41)** aufweist, die sich zur Anlage an der Unterseite des Mitnehmers **(3)** in Längsrichtung **(10)** sowie quer zur Umlaufebene **(2')** erstreckt
- oder die Kulissenführung **(40)** eine Führungsnut **(41)** aufweist, die sich zur Aufnahme des Führungs-Bolzen (3a1) in Längsrichtung **(10)** sowie quer zur Umlaufebene **(2')** erstreckt und mit der offenen Seite in Querrichtung (11) weist und
- Führungskurve oder Führungsnut **(41)** an ihrem in Durchlaufrichtung (10a) des Obertrums (2.1) der Zufuhrkette **(2)** weisenden Ende eine in der Seitenansicht auf die Umlaufebene (2') betrachtet bogenförmige Biegung in den Innenraum (16) der endlos umlaufenden Zufuhrkette **(2)** hinein vollzieht, so dass wenigstens am Anfang des Herumlaufens des Mitnehmers (3) um die stromabwärtige Umlenkrolle (2a) der Mitnehmer (3) seinen Aufrecht-Winkel 28) beibehält.

23. **Verfahren** zum Steuern einer Zufuhrketten-Einheit (44) nach einem der vorhergehenden Ansprüche.
**dadurch gekennzeichnet, dass**
bei in Längsrichtung (10) in zwei Auflage-Abschnitte (15a1, 15a2, 15b1, 15b2) unterteilten Auflage-Bändern (15a, 15b)
- der in Durchlaufrichtung (10a) stromaufwärtige Auflageteil-Abschnitt (15.1a, b) synchron mit dem Obertrum (2.1) der Zufuhrkette (2) mitlaufend gesteuert wird,
und/oder
- der in Durchlaufrichtung (10a) stromabwärtige Auflageteil-Abschnitt (15a1, 15b1) schneller als das Obertrum (2.1) der Zufuhrkette (2) laufend gesteuert wird.

## Claims

1. Feed chain unit (44) for moving products (100) forward over a conveying path (27) on a support surface (15), comprising
- an endless feed chain (2) revolving in a revolving plane (2') extending in the longitudinal direction (10) and having catchers (3) spaced thereon at longitudinal intervals (9), for moving the products (100) forward over the conveyor line (27),
- two support units (14a, b) arranged on both sides of the catchers (3) with respect to the longitudinal direction (10), each comprising an endless, circulating support part (15a, b), in particular support belt (15a, b), which together form the support surface (15),
- wherein the single-part or multi-part catchers (3) are each at least partially easily detachably fastened to the feed chain (2) so that they can be dismounted from the supply chain (2) and mounted thereon, in particular without dismounting the support surface (15),
- a controller (5) for controlling the movements of at least all moving parts of the feed chain unit (44),
wherein
- the catchers (3) protrude radially beyond the chain run,
- the upper strand of the support parts (15a, b) is arranged in each case above the upper strand (2.1) of the feed chain (2) in such a way that the catchers (3) extend upwards through the slot (25) between the support parts (15a, b),
**characterized in that**
- the lower strand of the support parts (15a, b) is also arranged in each case above the upper strand (2.1) of the feed chain (2) in such a way that the catchers (3) extend upwards through the slot (25) between the support parts (15a, b),
- both of the endless, circulating support parts (15a, b) are embodied to be adjustable in their mutual transverse spacing transversely to the circulation plane (2') between an operating position and a cleaning position.

2. Feed chain unit according to claim 1,
**characterized in that**
- the entire support units (14a, b) are embodied to be adjustable in their mutual transverse spacing transversely to the circulation plane (2') between an operating position and a cleaning position,
- in particular in such a way that, as a result, in the cleaning position there is sufficient space laterally next to the upper strand (2.1) of the feed chain (2) to dis mount or mount the catchers (3) on the upper strand (2.1) of the feed chain (2),
- in particular by means of the same robots, equipped only with a changeover tool, which place the products (100) on the support surface (15).

3. Feed chain unit (44) according to any of the preceding claims,
**characterized in that**
the support parts (15a, b), in particular the complete support units (14a, b)
- are movable in the transverse direction (11) to the plane of rotation (2') away from the catcher plane (3').
or
- can be pivoted about a pivot axis (14'a, b) running in the longitudinal direction (10).

4. Feed chain unit (44) according to one of the preceding claims,
**characterized in that**
a catcher changer (22) is arranged adjacent to the lower strand (2.2) of the feed chain (2), comprising a changing tool (23) for gripping, dismounting and depositing at least one catcher (3).

5. Feeder chain unit (44) according to claim 4,
**characterized in that**
- the catcher changer (22) is fixedly positioned in the longitudinal direction (10)
and/or
- a link guide (40) arranged on the feed chain (2) is movable, in particular movable away downward, at least in the region of the catcher changer (22) in such a way that the catchers (3) are accessible for the changing tool (23).

6. Feed chain unit (44) according to claim 4 or 5,
**characterized in that**
- the change tool (23), in particular the entire tool changer (22), is movable at least in the transverse direction (11) and the change tool (23) is pivotable about at least one tool axis (23'),
- preferably the change tool (23) is movable in at least one spatial direction (10, 12) in addition to the transverse direction (11).

7. Feed chain unit (44) according to any of the preceding claims, **characterized in that**
- each of the endless, circulating support parts (15a, b) consists, one behind the other in the longitudinal direction (10), of two endless, circulating support part sections (15.1 a, 15.2a, 15.1b, 15.2b) which can each be driven separately and can be controlled independently of one another in their circulating speed, and
- in particular the feed chain (2) extends in the longitudinal direction (10) over the gaps (13) present at the same longitudinal position between the two left and right support part sections (15.1 a, b, 15.2a, b).

8. Feed chain unit (44) according to any one of the preceding claims, **characterized in that**
- the feed chain unit (44) comprises a storage cassette (17) for catchers (3),
- the storage cassette (17) is retractable on storage guides (19a, b) into the gripping area of the tool changer (22).

9. Feed chain unit according to any of the preceding claims, **characterized in that**
- the catchers (3) are at least in each case at least partially dismountable fastened directly or indirectly to the feed chain (2) in such a way that, in order to dismount at least part of each catcher (3) from the feed chain (2), neither the feed chain (2) has to be removed from the machine nor other components have to be dismounted from the machine,
and/or
- the catchers (3) are directly attached and/or latched to longitudinally (10 b) displaced receivers of the feed chain (2).

10. Feeder chain unit according to any of the preceding claims, **characterized in that**
- the feed chain (2) is embodied as a pin chain, in particular as a roller chain, with chain pins (35) projecting outwardly on one side beyond the one chain flange (38), and
- in particular the feed chain (2) consists of individual chain links connected to one another in an articulated manner and the catchers (3) are directly attached or latched to the individual chain links (37) acting as receivers, in particular the chain pin (35) of a pin chain or roller chain.

11. Feeder chain unit according to any of the preceding claims, **characterized in that**
- either the entire catcher (3)
- or in the case of a multi-part catcher (3)
- either its base part (3a) on the feed chain (2)
- or its catcher part (3b) on the base part (3a) is pivotibly attached about a pivot axis (7) lying transversely to the running direction (1b) of the feed chain (2).

12. Feeder chain unit (44) according to any of the preceding claims, **characterized in that**
- the catcher (3) comprises a base part (3a) for attachment to the feed chain (2) and a catcher part (3b) fixedly connected thereto or attached thereto, which catcher part (3b) extends from the upper strand (2.1) through the slot (25) between the support parts (15a, b),
- the base part (3a) is made in particular of plastic and/or the catcher part (3b) is made in particular of stainless steel.

13. Feeder chain unit (44) according to any of the preceding claims, **characterized in that**
- the catcher (3) has a pin opening (3a1) extending in the transverse direction (11), into which the projection (35a) of a chain pin (35) fits.

14. Feeder chain unit (44) according to any of claims 4-14, **characterized in that**
- a catcher guide (24) arranged on the side of the catchers (3) fastened thereto facing away from the feed chain (2) is movable at least in the region of the catcher changer (22) in such a way that the catchers (3) are accessible for the changing tool (23),
- in particular the catcher guide (24) can be moved away downward.

15. Feed chain unit (44) according to one of the preceding claims, **characterized in that**
- a guide pin (3c) projects from the catcher (3) in the transverse direction (11), in particular in the direction of the feed chain (2).

16. Feed chain unit (44) according to any of the preceding claims, **characterized in that**
- the catcher (3) has a fastening device, especially a deposit opening (3a2) for form-fit reception in of a storage cassette (17),
- in particular in such a position that the catcher (3) stands in the storage cassette (17) with its catcher part (3b) pointing upwards from its base part (3a).

17. Feeder chain unit (44) according to claim 16,
**characterized in that**
the at least one deposit opening (3a2) is arranged in the base part (3a) in the underside facing away from the catcher part (3b) and is preferably a blind hole opening.

18. Feeder chain unit (44) according to any of the preceding claims,
**characterized in that**
- in the region of the upper strand (2.1), the feed chain (2) and at least part of the base parts (3a) of the catchers (3) fastened thereto are covered at least on the upper side and the two sides by an upper strand cover (24), and the catcher part (3b) of each catcher (3) projects upwards laterally next to the upper strand cover.

19. Feeder chain unit (44) according to claim 18,
**characterized in that**
the upper strand cover is embodied in such a way that the catchers (3) can be removed from the feed chain (2) without displacement or dismounting of the upper strand cover (24).

20. Supply chain unit according to any of the preceding claims,
**characterised in that**
a link guide (40) is provided for the catchers (3) so that, when the catcher (3) guided along the upper strand (2.1) of the feed chain (2) descends in the region of the downstream turning roller (2a), the forwardly directed contact surface (43) of the catcher (3) substantially maintains its previous upright angle (28), viewed perpendicularly to the plane of circulation (2'), with respect to the horizontal, at least over an initial part of the circulation around this turning roller (2a).

21. Feed chain unit according to claim 20,
**characterized in that**
the link guide (40) is formed and positioned such that the contact surface (43) substantially maintains its upright angle (28) until the top edge of the follower (3) has sunk below the top of the support surface (15).

22. Feeder chain unit according to any of claims 20 or 21,
**characterized in that**
- either the link guide (40) has a guide curve (41) which extends in the longitudinal direction (10) and transversely to the plane of rotation (2') for supporting the underside of the carrier (3)
- or the link guide (40) has a guide groove (41) which extends in the longitudinal direction (10) and transversely to the plane of rotation (2') for receiving the guide pin (3a1) and points with the open side in the transverse direction (11), and
- guide curve or guide groove (41) at its end extending in the direction of passage (10a) of the upper strand (2. 1) of the feed chain (2) performs an arcuate bend into the interior (16) of the endlessly circulating feed chain (2), as seen in the side view of the circulating plane (2'), so that, at least at the beginning of the circulation of the catcher (3) around the downstream turning roller (2a), the driver (3) maintains its upright angle (28).

23. Method of controlling a feeder chain unit (44) according to any one of the preceding claims,
**characterized in that**
in the case of support belts (15a, 15b) divided in the longitudinal direction (10) into two support sections (15a1, 15a2, 15b1, 15b2)
- the upstream support section (15.1 a, b) in the direction of passage (10a) is controlled to run synchronously with the upper strand (2.1) of the feed chain (2),
and/or
- the downstream support section (15a1, 15b1) in the direction of passage (10a) is controlled to run faster than the upper strand (2.1) of the feed chain (2).

## Revendications

1. **Unité de chaîne d'alimentation** (44) pour faire avancer des produits (100) sur un chemin de transport (27) sur une surface de support (15), avec
- une chaîne d'alimentation sans fin (2) circulant dans un plan de circulation (2') s'étendant dans la direction longitudinale (10), avec des entraîneurs (3) espacés sur celle-ci à des intervalles longitudinaux (9), pour faire avancer les produits (100) sur le chemin de transport (27),
- deux unités de support (14a, b) disposées de part et d'autre des entraîneurs (3) par rapport à la direction longitudinale (10), qui comprennent chacune une partie de support (15a, b) sans fin et circulante, en particulier une courroie de support (15a, b), qui forment ensemble la surface de support (15),
- dans lequel les entraîneurs (3) en une ou plusieurs pièces sont chacun au moins partiellement fixés de manière facilement détachable à la chaîne d'alimentation (2), de sorte qu'ils peuvent être démontés de la chaîne d'alimentation (2) et montés sur celle-ci, en particulier sans démontage de la surface de support (15),
- un dispositif de commande (5) pour commander les mouvements d'au moins toutes les parties mobiles de l'unité de chaîne d'alimentation (44),
- dans lequel les entraîneurs (3) font saillie radialement au-delà de la circulation de la chaîne,
- dans lequel le brin supérieur des parties de support (15a, b) est disposé à chaque fois au-dessus du brin supérieur (2.1) de la chaîne d'alimentation (2) de telle sorte que les entraîneurs (3) s'étendent vers le haut à travers la fente (25) entre les parties de support (15a, b),
**caractérisé en ce que**
- le brin inférieur des parties de support (15a, b) est également disposé respectivement au-dessus du brin supérieur (2.1) de la chaîne d'alimentation (2) de telle sorte que les entraîneurs (3) s'étendent vers le haut à travers la fente (25) entre les parties de support (15a, b),
- les deux parties de support sans fin et circulantes (15a, b) sont conçues pour être réglables dans leur espacement transversal mutuel, transversalement au plan de circulation (2'), entre une position de fonctionnement et une position de nettoyage.

2. Unité de chaîne d'alimentation selon la revendication 1,
**caractérisée en ce que**
- toutes les unités de support (14a, b) sont conçues pour être réglables dans leur espacement transversal mutuel transversalement au plan de circulation (2') entre une position de fonctionnement et une position de nettoyage,
- en particulier de telle manière que, dans la position de nettoyage, il y a suffisamment d'espace latéralement à côté du brin supérieur (2.1) de la chaîne d'alimentation (2) pour démonter ou monter les entraîneurs (3) sur le brin supérieur (2.1) de la chaîne d'alimentation (2),
- notamment au moyen des mêmes robots, équipés uniquement d'un outil interchangeable, qui placent les produits (100) sur la surface de support (15).

3. Unité de chaîne d'alimentation (44) selon l'une des revendications précédentes,
**caractérisée en ce que**
les parties de support (15a, b), en particulier les unités de support entières (14a, b)
- peuvent être éloigné du plan porteur (3') dans le sens transversal (11) par rapport au plan de circulation (2'),
ou
- peuvent pivoter autour d'un axe de pivotement (14'a, b) s'étendant dans la direction longitudinale (10).

4. Unité de chaîne d'alimentation (44) selon l'une des revendications précédentes,
**caractérisée en ce que**
un changeur d'entraîneur (22) est disposé adjacent au brin inférieur (2.2) de la chaîne d'alimentation (2), qui comprend un outil de changement (23) pour saisir, démonter et déposer au moins un entraîneur (3).

5. Unité de chaîne d'alimentation (44) selon la revendication 4,
**caractérisée en ce que**
- le changeur d'entraîneur (22) est positionné de manière fixe dans la direction longitudinale (10)
et/ou
- un guidage de coulisse (40) disposé sur la chaîne d'alimentation (2) peut être déplacé au moins dans la zone du changeur d'entraîneur (22), en particulier éloigné vers le bas de telle sorte que les entraîneurs (3) soient accessibles pour l'outil de changement (23).

6. Unité de chaîne d'alimentation (44) selon la revendication 4 ou 5,
**caractérisée en ce que**
- l'outil de changement (23), en particulier l'ensemble du changeur d'outils (22), peut être déplacé au moins dans la direction transversale (11) et l'outil de changement (23) peut pivoter autour d'au moins un axe d'outil (23'),
- de préférence, l'outil de changement (23) peut être déplacé dans au moins une direction spatiale (10, 12) en plus de la direction transversale (11).

7. Unité de chaîne d'alimentation (44) selon l'une des revendications précédentes,
**caractérisée en ce que**
- chacune des parties de support sans fin et circulantes (15a, b) comprend, l'une derrière l'autre dans le sens longitudinal (10), deux sections de parties de support sans fin et circulantes (15.1a, 15.2a, 15.1b, 15.2b) qui peuvent être entraînées chacune séparément et dont la vitesse de circulation peut être commandée indépendamment l'une de l'autre, et
- en particulier, la chaîne d'alimentation (2) s'étend dans la direction longitudinale (10) sur les interstices (13) présents à la même position longitudinale entre les deux sections gauche et droite de la partie de support (15.1a, b, 15.2a, b).

8. Unité de chaîne d'alimentation (44) selon l'une des revendications précédentes,
**caractérisée en ce que**
- l'unité de chaîne d'alimentation (44) comprend une cassette de dépôt (17) pour les entraîneurs (3),
- la cassette de dépôt (17) peut être déplacée dans la zone de préhension du changeur d'outils (22) sur des guidages de dépôt (19a, b).

9. Unité de chaîne d'alimentation selon l'une des revendications précédentes, **caractérisée en ce que**
- les entraîneurs (3) sont fixés directement ou indirectement de manière amovible, au moins partiellement, à la chaîne d'alimentation (2) de telle sorte que, pour détacher au moins une partie de chaque support (3) de la chaîne d'alimentation (2), il n'est pas nécessaire de retirer la chaîne d'alimentation (2) de la machine qui la reçoit ni de démonter d'autres composants de la machine.
et/ou
- les entraîneurs (3) sont directement branchés et/ou verrouillés sur des récepteurs de la chaîne d'alimentation (2) espacés dans le sens longitudinal (10 b).

10. Unité de chaîne d'alimentation selon l'une des revendications précédentes,
**caractérisée en ce que**
- la chaîne d'alimentation (2) est conçue comme une chaîne à axes, en particulier comme une chaîne à rouleaux, avec des axes de chaîne (35) faisant saillie vers l'extérieur d'un côté au-delà de ladite une joue de la chaîne (38), et
- en particulier la chaîne d'alimentation (2) se compose de maillons de chaîne individuels qui sont reliés entre eux de manière articulée, et les entraîneurs (3) sont enfichés ou encliquetés directement sur les maillons de chaîne individuels (37), en particulier l'axe de chaîne (35) d'une chaîne à axes ou d'une chaîne à rouleaux, qui servent comme récepteurs.

11. Unité de chaîne d'alimentation selon l'une des revendications précédentes,
**caractérisée en ce que**
- soit l'entraîneur entier (3),
- ou dans le cas d'un entraîneur à plusieurs parties (3),
- soit sa partie de base (3a) sur la chaîne d'alimentation (2),
- soit sa partie d'entraîneur (3b) sur la partie de base (3a),
sont fixés de manière articulée autour d'un axe de pivotement (7) situé transversalement au sens de marche (1b) de la chaîne d'alimentation (2).

12. Unité de chaîne d'alimentation (44) selon l'une des revendications précédentes,
**caractérisée en ce que**
- les entraîneur (3) comprennent une partie de base (3a) destinée à être fixée à la chaîne d'alimentation (2) et une partie d'entraîneur (3b) qui y est reliée de manière fixe ou qui y est fixée et qui s'étend depuis le brin supérieur (2.1) à travers la fente (25) entre les parties de support (15a, b),
- la partie de base (3a) est en particulier en plastique et/ou la partie conductrice (3b) est en particulier en acier inoxydable.

13. Unité de chaîne d'alimentation (44) selon l'une des revendications précédentes,
**caractérisée en ce que**
- l'entraîneur (3) présente une ouverture d'axe (3a1) qui s'étend dans la direction transversale (11) et dans laquelle s'insère la saillie (35a) d'un axe de chaîne (35).

14. Unité de chaîne d'alimentation (44) selon l'une des revendications 4 à 14,
**caractérisée en ce que**
- un guidage d'entraîneur (24) disposé sur le côté des entraîneurs (3) qui y sont attachés, opposé à la chaîne d'alimentation (2), est mobile au moins dans la zone du changeur d'entraîneur (22) de telle sorte que les entraîneurs (3) sont accessibles à l'outil de changement (23),
- en particulier, le guidage d'entraîneur (24) peut être éloigné vers le bas.

15. Unité de chaîne d'alimentation (44) selon l'une des revendications précédentes,
**caractérisée en ce que**
- un axe de guidage (3c) fait saillie de l'entraîneur (3) dans la direction transversale (11), en particulier dans la direction de la chaîne d'alimentation (2).

16. Unité de chaîne d'alimentation (44) selon l'une des revendications précédentes,
**caractérisée en ce que**
- l'entraîneur (3) comprend un dispositif de fixation, une ouverture de dépôt (3a2), pour la réception positive dans une cassette de dépôt (17)
- en particulier dans une position telle que l'entraîneur (3) doit être placé dans la cassette de dépôt (17) avec sa partie d'entraîneur (3b) dirigée vers le haut à partir de sa partie de base (3a).

17. Unité de chaîne d'alimentation (44) selon la revendication 16,
**caractérisée en ce que**
ladite au moins une ouverture de dépôt (3a2) est disposée dans la partie de base (3a) sur la face inférieure opposée à la partie d'entraîneur (3b) et est de préférence une ouverture à trou borgne.

18. Unité de chaîne d'alimentation (44) selon l'une des revendications précédentes,
**caractérisée en ce que**
- dans la zone du brin supérieur (2.1), la chaîne d'alimentation (2) et au moins une partie des parties de base (3a) des entraîneurs (3) qui y sont fixées sont recouvertes au moins sur le côté supérieur et les deux côtés par un couvercle de brin supérieur (24), et la partie d'entraîneur (3b) de chaque entraîneur (3) dépasse vers le haut latéralement à côté du couvercle de brin supérieur.

19. Unité de chaîne d'alimentation (44) selon la revendication 18,
**caractérisée en ce que**
le couvercle de brin supérieur est formé de telle sorte que les entraîneurs (3) peuvent être retirés de la chaîne d'alimentation (2) sans déplacement ni démontage du couvercle de brin supérieur (24).

20. Unité de chaîne d'alimentation selon l'une des revendications précédentes,
**caractérisée en ce qu'**un guidage de coulisse (40) pour les entraîneurs (3) est prévu de sorte que, lorsque le guidage de coulisse (40) est abaissé le long du brin supérieure (2. 1) de la chaîne d'alimentation (2) dans la région du rouleau de guidage (2a) situé en aval, la surface de contact (43) de l'entraîneur (3) dirigée vers l'avant maintient sensiblement son angle de redressement (28) précédent, considéré comme perpendiculaire au plan de circulation (2'), par rapport à l'horizontale, au moins sur une partie initiale de la circulation autour de ce rouleau de guidage (2a).

21. Unité de chaîne d'alimentation selon la revendication 20,
**caractérisée en ce que**
le guidage de coulisse (40) est conçu et positionné de telle manière que la surface de contact (43) conserve sensiblement son angle droit (28) jusqu'à ce que le bord supérieur de l'entraîneur (3) se soit abaissé sous la face supérieure de la surface de support (15).

22. Unité de chaîne d'alimentation selon l'une des revendications 20 ou 21,
**caractérisée en ce que**
- soit le guidage de coulisse (40) présente une courbe de guidage (41) qui, pour l'appui contre la face inférieure de l'entraîneur (3), s'étend dans la direction longitudinale (10) et transversalement au plan de rotation (2')
- soit le guidage de coulisse (40) présente une rainure de guidage (41) qui s'étend dans la direction longitudinale (10) et transversalement au plan de rotation (2') pour recevoir l'axe de guidage (3a1) et qui est orientée avec le côté ouvert dans la direction transversale (11), et
- la courbe de guidage ou la rainure de guidage (41) à son extrémité orienté dans le sens du passage (10a) du brin supérieure (2. 1) de la chaîne d'alimentation (2), effectue un coude en arc de cercle à l'intérieur (16) de la chaîne d'alimentation (2) en circulation sans fin, comme on peut le voir dans la vue latérale du plan de circulation (2'), de sorte qu'au moins au début de la circulation de l'entraîneur (3) autour du rouleau de guidage (2a) situé en aval, l'entraîneur (3) conserve son angle droit (28).

23. **Procédé** pour commander une unité de chaîne d'alimentation (44) selon une des revendications précédentes,
**caractérisé en ce que**
dans le cas des ceintures de support (15a, 15b) divisées dans le sens longitudinal (10) en deux sections de support (15a1, 15a2, 15b1, 15b2)
- la section de la partie de support en amont (15.1a, b) dans le sens du passage (10a) est commandée pour se déplacer de manière synchrone avec le brin supérieur (2.1) de la chaîne d'alimentation (2)
et/ou
- la section de la partie de support en aval (15a1, 15b1) dans le sens du passage (10a) est commandée pour fonctionner plus rapidement que le brin supérieure (2.1) de la chaîne d'alimentation (2).
